# EUROPEAN PATENT SPECIFICATION

(11) **EP 1 513 401 B1**
(45) Date of publication and mention of the grant of the patent: **11.05.2011**
(21) Application number: 03746061.5
(22) Date of filing: 27.03.2003
(51) Int. Cl.: A01N 35/06, A01N 37/08, A01N 37/42, A01N 37/44

(54) **METHOD FOR INHIBITING DIFFERENTIATION AND FORMATION OF CONIFEROPHYTA MALE FLOWER BY TREATMENT WITH PROHEXADIONE COMPOUNDS**
VERFAHREN ZUR HEMMUNG DER DIFFERENZIERUNG UND BILDUNG VON MÄNNLICHEN CONIFEROPHYTA-BLÜTEN DURCH BEHANDLUNG MIT PROHEXADION-VERBINDUNGEN
PROCEDE D INHIBITION DE LA DIFFERENTIATION ET DE LA FORMATION DE FLEUR MALE DE CONIFEROPHYTA PAR TRAITEMENT AVEC DES COMPOSES DE PROHEXADIONE

(30) Priority: 29.03.2002 JP 2002096768
(43) Date of publication of application: 16.03.2005
(73) Proprietor: Syngenta Participations AG, 4058 Basel (CH)
(72) Inventor: HOMMA, Tamaki; c/o Tottori University, Tottori, Tottori 680-8553 (JP); YODER, Joe; c/o Syngenta Crop Protection LLC, Greensboro, NC 27409 (US)
(74) Representative: Ward, Steven Paul
(86) International application number: PCT/US2003/009441
(87) International publication number: WO 2003/084323

(56) References cited:
- EP-A- 0 123 001
- EP-A- 0 126 713
- JP-A- 59 231 045
- US-A- 5 665 680
- E. YOSHII ET AL.: "Observations of airborne Cryptomeria japonica pollen in the summer" ALLERGOLOGY INT., vol. 50, 2001, pages 171-177, XP002326266
- DATABASE BIOSIS [Online] BIOSCIENCES INFORMATION SERVICE, PHILADELPHIA, PA, US; 2004, Y. GOTO ET AL.: "Inducing male flowering by applying GA has no effect on the Cry j 1 content in Cryptomeria japonica pollen." XP002326267 retrieved from BIOSIS accession no. 2004:182O14 Database accession no. PREV200400185430 & Y.GOTO, T.KONDO & H. YASUEDA: SILVAE GENETICA, vol. 52, no. 3-4, 2003,
- TOMLIN C.D.S.: 'The Pesticide Manual', 1987 article 'Prohexadione-calcium', pages 1008 - 1009, XP002968020 11th Edition, Entry 595

## Description

The present invention relates to a method and composition for inhibiting the formation of Coniferophyta pollen, comprising the use of a prohexadione compound as an active ingredient. In particular, the present invention relates to a method and composition for inhibiting the formation of Coniferophyta pollen, such as Cryptomeria japonica (sugi) pollen, employing a composition that contains as a main ingredient, a prohexadione compound which does not substantially inhibit the elongation growth of Coniferophyta such as Cryptomeria japonica and has an excellent effect of inhibiting the formation of male flowers thereof.

### Prior Art Technology

Recently, Cryptomeria japonica pollinosis is one of typical allergic diseases in early spring, in particular, March and April in Japan. It is said that 1/5 of Japanese population are patients suffering from Cryptomeria japonica pollinosis. Under these conditions, measures for preventing and inhibiting Cryptomeria japonica pollinosis are demanded. Although various investigations were recently made on the prevention and treatment of Cryptomeria japonica pollinosis from the medical standpoint, any effective method for the prevention or treatment has not yet been established.

On the other hand, for preventing and inhibiting Cryptomeria japonica pollinosis, it is considered that botanical methods must be also discussed. Namely, if the formation of the Cryptomeria japonica pollen *per se* can be prevented or inhibited, the cause of Cryptomeria japonica pollinosis is removed and Cryptomeria japonica pollinosis is effectively prevented. In this case, it is considered that the formation of male flowers of Cryptomeria japonica which are the cause of the formation of Cryptomeria japonica pollen is to be inhibited.

After intensive investigations on substances inhibiting the formation of male flowers of Cryptomeria japonica, it has been found that the prohexadione compounds effectively control the formation of male flowers of Coniferophyta such as Cryptomeria japonica without substantially inhibiting the elongation growth of such Coniferophyta and has an excellent effect of inhibiting the formation of male flowers thereof.

### Summary of the Invention

After intensive investigations made for the purpose of providing an agent for inhibiting the formation of Cryptomeria japonica pollen, which does not substantially inhibit the elongation growth of Cryptomeria japonica and has an excellent effect of inhibiting the formation of male flowers thereof, it has been found that prohexadione compounds have such an effect. The present invention has been completed on the basis of this finding.

### Description of Embodiments

The detailed description on the present invention will be made below.

The prohexadione compounds of the present invention inhibit the biosynthesis of gibberellin. In particular, the prohexadione compounds of the present invention inhibit the activity of 3- β hydroxynase which is an enzyme involved in the hydroxylation at 3- β position in the biosynthesis of physiologically active gibberellin. Various prohexadione compounds are usable so far as they have such a function.

In addition, prohexadione compounds are rapidly decomposed and they scarcely exert an influence on the growth of plants other than Cryptomeria japonica. Thus, the prohexadione compounds are suitable for the environmental protection and safety of the plants.

The following examples of the prohexadione compounds of the present invention can be given: They are described in, for example, the specification of JP Kokai No. Sho 59-231045. However, although this specification discloses that those compounds have selective growth-inhibiting effect on plants such as rice plants and also selective herbicidal effect, it does not disclose or suggest the use of the compounds as agents for inhibiting the formation of Cryptomeria japonica pollen, which do not inhibit the elongation growth of Cryptomeria japonica and have an excellent effect of inhibiting the formation of male flowers thereof.

The prohexadione compounds include, for example, the following compounds:
(I) cyclohexanedioncarboxylic acid derivatives of the following formula AI: 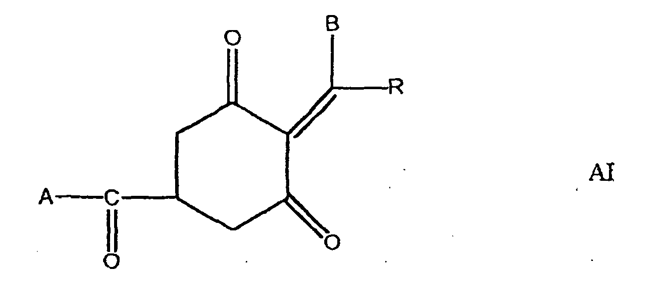 wherein:
   A represents an -OR₂ or -NR₃R₄,
   B represents a hydroxyl group, an -NHOR₁ group or a salt thereof,
   R represents an alkyl group having 1 to 6 carbon atoms or a cycloalkyl group having 3 to 6 carbon atoms, the alkyl or cycloalkyl group being unsubstituted or substituted with a halogen atom, an alkoxyl group having 1 to 6 carbon atoms or an alkylthio group having 2 to 4 carbon atoms,
   R₁ represents an alkyl group having 1 to 6 carbon atoms, a haloalkyl group having 1 to 6 carbon atoms, an alkenyl group having 3 to 6 carbon atoms, a haloalkenyl group having 3 to 6 carbon atoms or an alkynyl group having 3 to 6 carbon atoms, and
   R₂, R₃ and R₄ independently represent a hydrogen atom, an alkyl group having 1 to 6 carbon atoms, a haloalkyl group having 1 to 6 carbon atoms, an alkoxyalkyl group having 2 to 10 carbon atoms, an alkylthioalkyl group having 2 to 10 carbon atoms, an alkenyl group having 3 to 6 carbon atoms, which group may be substituted with a halogen atom, an alkoxyl group having 1 to 4 carbon atoms or an alkylthio group having 1 to 4 carbon atoms, an alkynyl group having 5 or 6 carbon atoms, or a phenyl group or an aralkyl group having 1 to 6 carbon atoms wherein the phenyl nucleus may be substituted with a halogen atom, an alkyl group having 1 to 4 carbon atoms, an alkoxyl group having 1 to 4 carbon atoms, a haloalkyl group having 1 to 4 carbon atoms, a nitro group or a cyano group, and
   R₃ and R₄ may form a 5- or 6-membered heterocyclic ring together with the nitrogen atom to which they are bonded and the ring may further contain a carbon atom or sulfur atom.

   In the, above-described definition, the alkyl groups may be either linear or branched, and they include, for example, methyl group, ethyl group, propyl group, isopropyl group, butyl group, isobutyl group, secondary butyl group, tertiary butyl group and all the stereoisomers of higher homologues thereof. The alkenyl groups and alkynyl groups may be either linear or branched, and they include, for example, vinyl group, allyl group, methallyl group, butenyl group, methylbutenyl group, dimethylbutenyl group, ethynyl group, propynyl group, butynyl group, methylbutynyl group and dimethylbutynyl group.
   The halogen atom represents fluorine atom, chlorine atom, bromine atom or iodine atom.
   The ring may further contain an oxygen atom or a sulfur atom. The 5- or 6-membered heterocyclic -NR₃R₄ may be a pyrrole, pyrrolidine, piperidine, morpholine or thiomorpholine ring or the like. Such a ring may be substituted with a methyl group.
   Salts of these compounds (including ammonium salts thereof) are obtained by the reaction of them with a base. The preferred bases are, for example, alkali metal hydroxides; alkaline earth metal hydroxides; iron, copper, nickel and zinc hydroxides; ammonia; alkylammoniums having 1 to 4 quaternary carbon atoms; and hydroxyalkylammonium bases having 1 to 4 carbon atoms.
   In the cyclohexanedioncarboxylic acid derivatives of general formula AI, particularly effective compounds are those of the following groups:
   Cyclohexane derivatives of the following formula AIa and salts thereof, preferably metal salts or ammonium salts thereof: 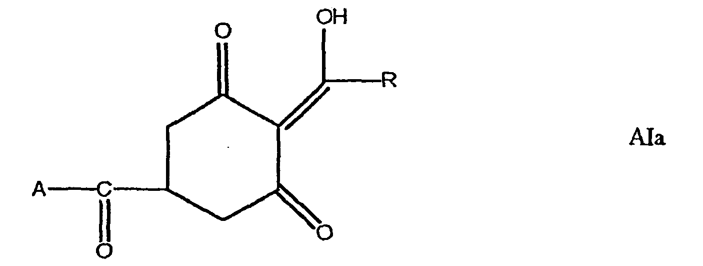 wherein A and R are as defined above;
   The derivatives of above formula AIa wherein A represents an -OR₂ and R and R₂ are as defined above, and metal salts or ammonium salts thereof; The derivatives of above formula AIa wherein A represents an -NR₃R₄ and R, R₃ and R₄ are as defined above, and metal salts or ammonium salts thereof; and
   The derivatives of above formula AIa wherein A is as defined above, and R represents a cycloalkyl group having 3 to 6 carbon atoms, and metal salts or ammonium salts thereof.

   Further effective compounds are cyclohexanedions of the following formula AIb and metal salts or ammonium salts thereof: 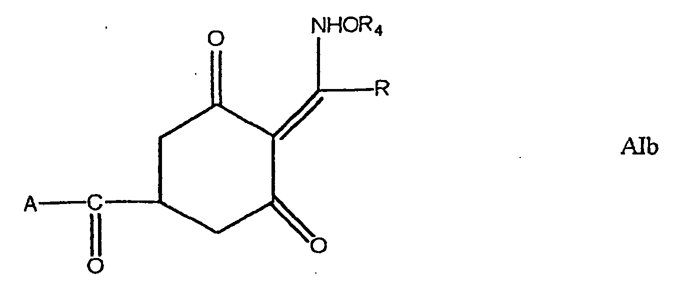 wherein A, R and R₁ are as defined above;
   The derivatives of above formula AIb wherein A represents an -OR₂ and R, R₁ and R₂ are as defined above, and metal salts or ammonium salts thereof; and
   The derivatives of above formula AIb wherein A represents an -NR₃R₄, and R, R₁, R₃ and R₄ are as defined above, and metal salts or ammonium salts thereof.
   Examples of the preferred compounds are as follows:
   ethyl 4-butyryl-3,5-cyclohexanedioncarboxylate, isobutyl 4-butyryl-3,5-cyclohexanedioncarboxylate, ethyl 4-(1-ethoxyaminobutylidene)-3,5-cyclohexanedioncarboxylate, ethyl 4-(1-allyloxyaminobutylidene)-3,5-cyclohexanedioncarboxylate, ethyl 4-(1-cyclopropylhydroxymethylidene)-3,5-cyclohexanedioncarboxylate, isobutyl 4-(1-allyloxyaminobutylidene)-3,5-cyclohexanedioncarboxylate, dimethyl 4-(1-ethoxyaminobutylidene)-3,5-cyclohexanedioncarboxamide, dimethyl 4-(1-allyloxyaminobutylidene)-3,5-cyclohexanedioncarboxamide, diethyl 4-(1-allyloxyaminobutylidene)-3,5-cyclohexanedioncarboxamide, benzyl 4-(1-ethoxyaminobutylidene)-3,5-cyclohexanedioncarboxamide and sodium, ammonium and tetramethylammonium salts of them.
   The cyclohexanedioncarboxylic acid derivatives of above formula AI can be obtained in the form of, for example, various tautomers as shown below: 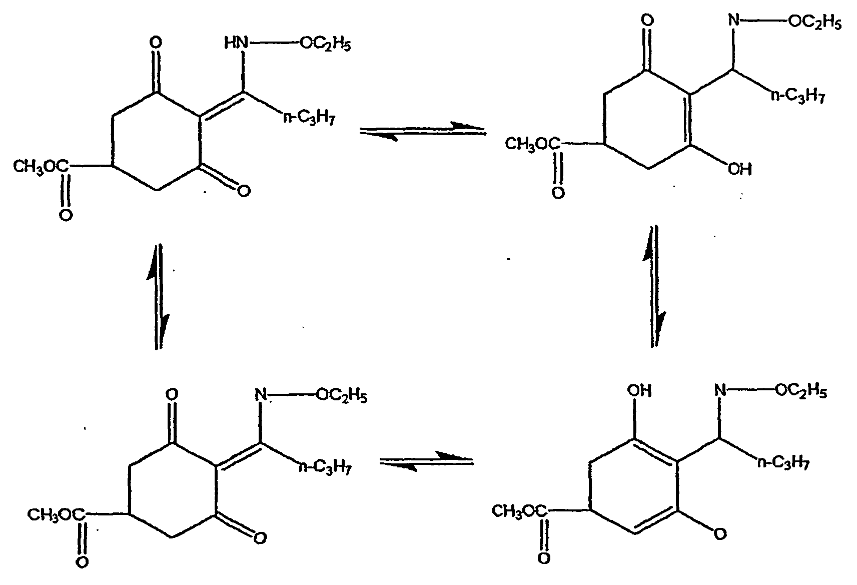
   The cyclohexanedioncarboxylates of formula AI are produced by reacting a 3,5-cyclohexanedioncarboxylic acid derivative of the following formula II: 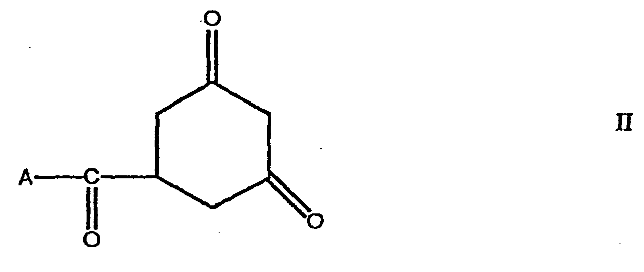 wherein A represents the above-described ester or amido group,
   with an acid halide of the following formula III:

   Hal-COR (III)

   wherein R is as defined above,
   in the presence of a base as an acid acceptor in an inert organic solvent, then isolating the product thus obtained and, if desired, reacting the product with a hydroxylamine of the following formula IV:

   HONHR₁ (IV)

   wherein R₁ is as defined above,
   in an inert water-immiscible solvent at the boiling temperature under condensation conditions, and isolating the resultant product.
   The solvents particularly suitable for the reaction are, for example, aromatic hydrocarbons such as benzene, toluene and xylene, and also halogenated hydrocarbons such as chloroform, dichloroethane and carbon tetrachloride.
   The reaction temperature is in the range of room temperature to the boiling point of the reaction mixture. It might be necessary to cool the reaction vessel while the acid chloride is added.
   Suitable acid acceptors are organic and inorganic bases such as pyridine, 4-aminopyridine, collidine, triethylamine, ammonium, as well as sodium, potassium and calcium carbonates and corresponding bicarbonates.
   The suitable acid halides of formula III are mainly acetyl chloride, propionyl chloride, butyryl chloride, valeryl chloride, 3-methoxypropionyl chloride, 2-chloropropionyl chloride, cyclopropanoyl chloride and cyclohexanoyl chloride, as well as corresponding bromides.
   The suitable hydroxylamines of formula IV are particularly methyl-, ethyl-, chloroethyl-, propyl-, isopropyl-, butyl-, isobutyl-, allyl-, cycloallyl-, methallyl- and propinylhydroxylamines. They can be used in the form of salts such as hydrochlorides thereof.
   The cyclohexanedioncarboxylic acid derivatives of formula II used as the starting materials can also be obtained by hydrogenating 3,5-dihydroxybenzoic acid with hydrogen in the presence of Raney nickel and then esterifying or amidating the acid group thereof according to the following reaction scheme: 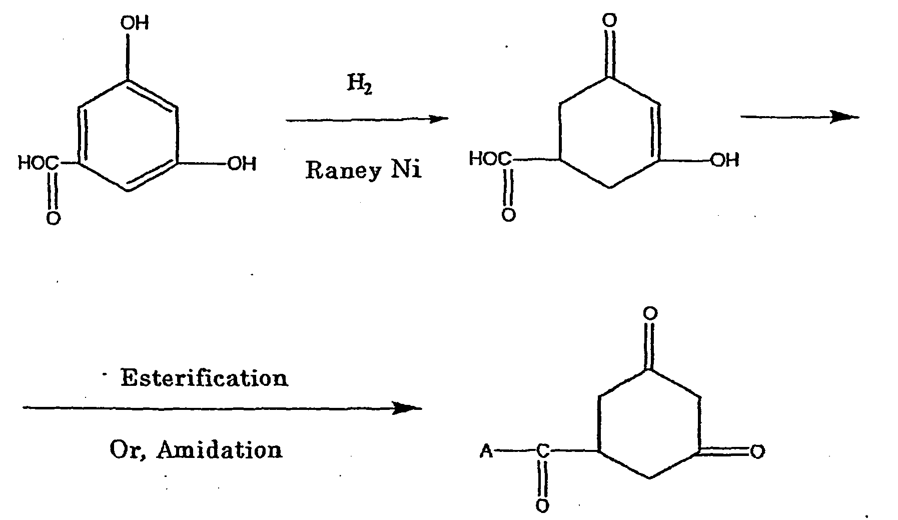
   In the above formulae, the keto group must be protected in the form of an enol ether or an enamine [refer to J. Am. Chem. Soc. 78, 4405 (1956)].
   In addition, 3,5-dihydroxybenzoic acid derivatives can be hydrogenated with hydrogen in the presence of Raney nickel according to the following reaction formula: 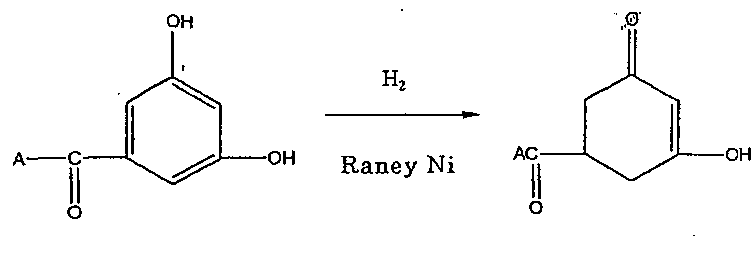 [refer to Arch. Pharm. 307, 577 (1974)].
(II) Cyclohexane compounds of the following formula BI and salts thereof: 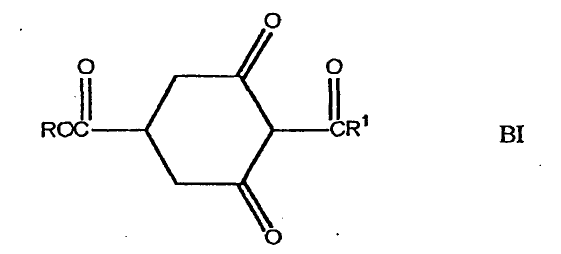 wherein R represents a hydrogen atom or an alkyl group, and R¹ represents an alkyl group.
   These compounds are disclosed in the specification of JP Kokai No. Hei 4-29659. However, this specification only discloses plant growth regulators containing such a compound, and it does not disclose nor suggest any use of the compounds as agents for inhibiting the formation of Cryptomeria japonica pollen which do not substantially inhibit the elongation growth of Cryptomeria japonica and have an excellent effect of inhibiting the formation of male flowers thereof.
   Concrete examples of those compounds are as follows:
   Compounds of the following formula BIa: 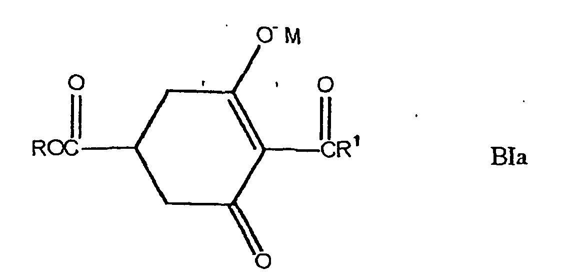
   Compounds of the following formula BIb: 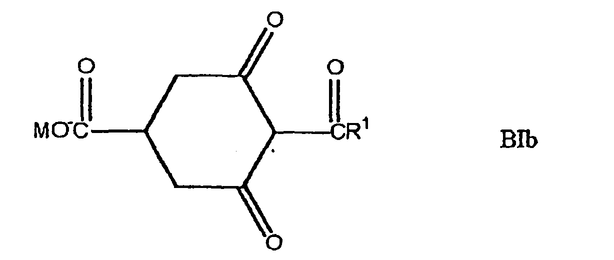
   Compounds of the following formula BIc: 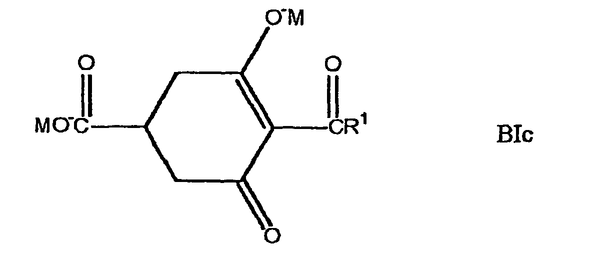 wherein R and R¹ are as defined above, and M represents an organic or inorganic cation.

   The alkyl groups are, for example, methyl group, ethyl group, propyl group and butyl group. The organic or inorganic cations are, for example, cations of metals such as alkali metals, alkaline earth metals, aluminum, copper, nickel, manganese, cobalt, zinc, iron and silver, and ammonium ions of the formula: 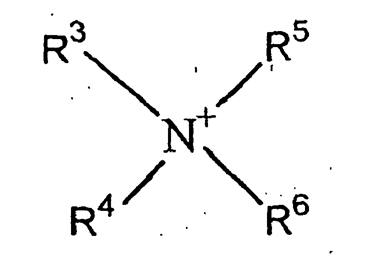 wherein R³, R⁴, R⁵ and R⁶ each represents a hydrogen atom, an alkyl group, a hydroxyalkyl group, an alkenyl group, benzyl group, a benzyl group substituted with a halogen atom, a pyridyl group or a pyridyl group substituted with an alkyl group, and R³ and R⁴ may together form a polymethylene group or a polymethylene group with an oxygen atom between them.
   Those compounds can be produced by the following processes: 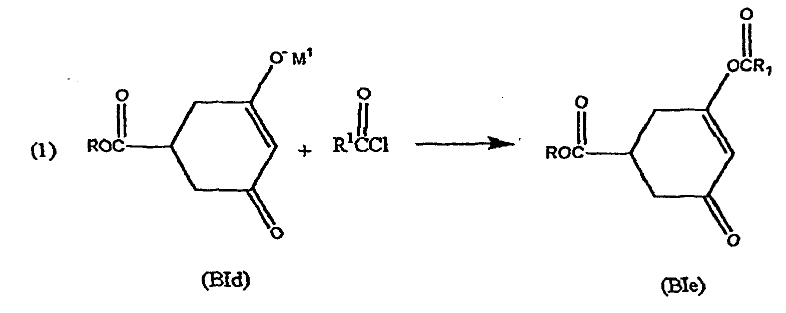 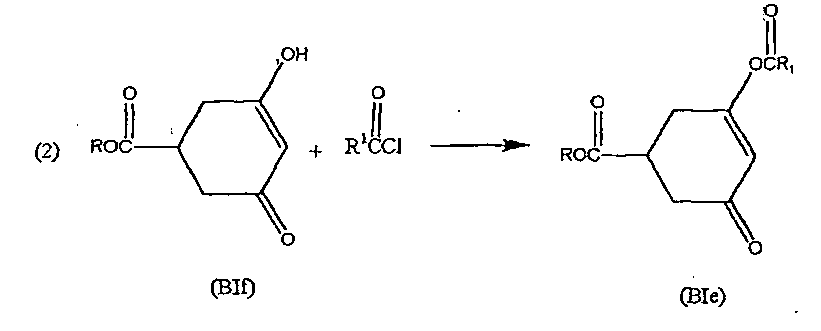 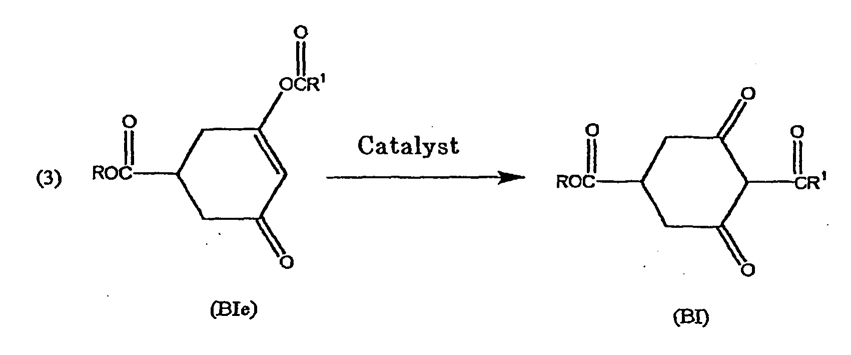 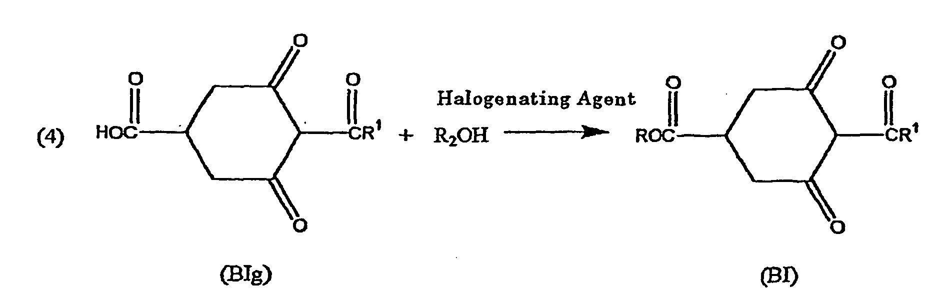 wherein R² represents an alkyl group, M¹ represents an alkali metal atom, and R and R¹ are as defined above.
   Namely, compounds [BIe] can be produced by reacting a compound [BId] or [BIf] with an acid chloride in the presence or absence of γ-picoline and also in the presence or absence of a base in a solvent at a temperature in the range of -20°C to the boiling point of the solvent, preferably not higher than room temperature for 10 minutes to 7 hours. The bases can be selected from those usually used for dehydrohalogenation reactions. The bases are organic bases such as trimethylamine, triethylamine, tripropylamine, tributylamine, pyridine and N,N-dimethylaminopyridine, and inorganic bases such as sodium hydroxide, potassium hydroxide, sodium carbonate, potassium carbonate and sodium hydrogencarbonate. The solvents are organic solvents such as toluene, benzene, xylene, dichloromethane, 1,2-dichloroethane, chloroform, carbon tetrachloride, N,N-dimethylformamide, dimethyl sulfoxide and methyl cellosolve and/or water. γ -Picoline is also considered to have an effect of phase-transfer catalyst.
   Compounds [BI] can be produced by reacting a compound [BIe] in the presence of a catalyst in a solvent at a temperature in the range of room temperature to the boiling point of the solvent for 1 to 10 hours [formula (3)]. The catalysts include pyridine derivatives such as 4-N,N-dimethylaminopyridine, 4-N,N-diethylaminopyridine and 4-pyrrolidinoaminopyridine; and N-alkylimidazole derivatives such as N-methylimidazole and N-ethylimidazole.
   The compounds [BI] can be produced without isolating the intermediates [BIe].
   The compounds [BI] can also be produced by reacting a compound [BIg] with a halogenating agent in the presence or absence of a base in a solvent or without any solvent at a temperature in the range of -20°C to a boiling point of the solvent or halogenating agent, preferably in the range of -10°C to 100°C for 10 minutes to 7 hours to halogenate the compound [BIg] and then reacting the resultant product with an alcohol of the formula: R₂OH in the presence or absence of a base at a temperature in the range of -20°C to 100°C for 10 minutes to 48 hours. The solvents used for the halogenation include, for example, dichloromethane, chloroform, carbon tetrachloride, benzene, toluene and xylene. The base used for the halogenation or esterification can be selected from those usually used for the dehydrohalogenation reactions. The bases include organic bases such as triethylamine, pyridine, N,N-dimethylaminopyridine and N,N-dimethylaniline; and inorganic bases such as sodium hydroxide, potassium carbonate and sodium hydrogencarbonate. The halogenating agents include, for example, thionyl chloride, phosphorus trichloride, phosphorus pentachloride and phosphorus oxychloride. A halide of the intermediate can also be isolated and esterified.
   Salts of the above-described compounds can be produced as follows: Organic or inorganic salts can be produced by reacting a compound of general formula [BI] with an equivalent or 2 or higher equivalents of a primary amine; a secondary amine; a tertiary amine; an alcoholate; or a chloride, hydride, hydroxide, sulfate, nitrate, acetate or carbonate of a metal such as sodium, potassium, calcium, magnesium, barium, aluminum, nickel, copper, manganese, cobalt, zinc, iron or silver; in an organic solvent. When they are reacted with each other in equivalent amounts, the obtained salt is in the form of the formula [BIa] in case R in the formula [BI] is other than hydrogen atom, and the obtained salt is in the form of the formula [BIb] in case R is hydrogen atom. When such a compound is used in an amount of 2 equivalents or more, the resultant compound is in the form of the formula [BIc].
   Those compounds can be represented by the following tautomeric structural formulae: 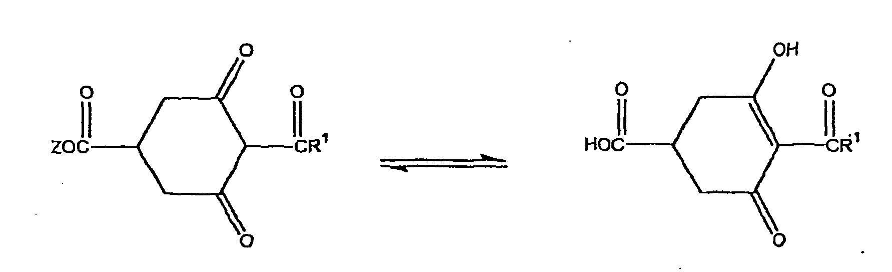 wherein Z represents R or M, and R, M and R¹ are as defined above.
(III) Cyclohexane compounds of the following formula CI or salts thereof: 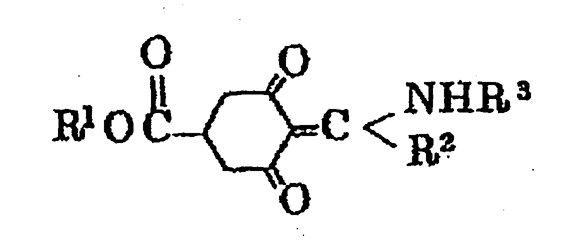 wherein R¹ represents a hydrogen atom or a lower alkyl group, R² represents a lower alkyl group, and R³ represents a hydrogen atom, an alkyl group, an alkenyl group, a hydroxyalkyl group, a cycloalkyl group, morpholino group, an aminoalkyl group, an N-alkylaminoalkyl group, an N,N-dialkylaminoalkyl group, an alkoxycarbonylalkyl group, a group of the formula:

   -(CH₂)₁R⁴

   (wherein R⁴ represents a lower alkoxyl group, a lower alkylthio group, a benzylthio group, an anilino group, a morpholino group, a piperazino group or a piperidino group which may be substituted with a lower alkyl group, and 1 represents an integer of 2 or 3),
   a group of the formula: 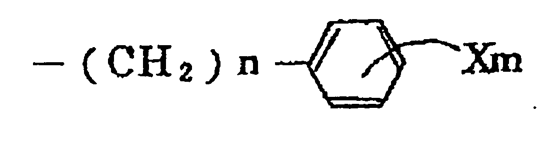 (wherein X represents a halogen atom, a lower alkyl group, a lower alkoxyl group, phenoxy group or an alkoxycarbonylalkyloxy group, m represents an integer of 0 or 1, and n represents an integer of 0 to 2), a group of the formula:

   -CH₂R⁵

   (wherein R⁵ represents a furyl group, a thenyl group or a pyridyl group), or
   a group of the formula: 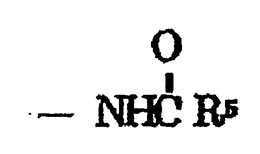 (wherein R⁵ is as defined above).
   Those compounds are disclosed in JP-Kokai No. Hei 6-76356. However, the specification thereof discloses only the plant growth regulators containing those compounds and it does not disclose nor suggest any use of those compounds as agents for inhibiting the formation of Cryptomeria japonica pollen, which do not substantially inhibit the elongation growth of Cryptomeria japonica and which have an excellent effect of inhibiting the formation of male flowers thereof.
   Although the present invention is primarily exemplified by being described in terms of a method for using prohexadione compounds for inhibiting the formation of Cryptomeria japonica pollinosis, those skilled in the art will appreciate that the methods and composition of the present invention also are suitable for inhibiting pollinosis in other plants of the division *Coniferophyta* and, in particular, in plants of the class *Pinopsida* including, for example: from the family *Araucariaceae,* for example, *Agathis Salisb. spp., Araucaria Juss. spp.* and *Wollemia W.* (*W. nobilis*); from the family *Cephalotaxaceae,* for example, *Cephalotaxus Siebold & Zucc. spp.;* from the family *Cupressaceae,* for example, *Actinostrobus Miq. spp., Austrocedrus Florin & Boutelje spp. (A. chilensis), Callitris Vent. spp., Calocedrus Kurz. spp, Chamaecyparis Spach. spp., Cupressus L. spp., Diselma Hook.f. spp. (D. archeri), Fitzroya Hook.f. ex Lindl.* spp. (*F. cupressoides*), *Fokienia A.Henry & H.H.Thomas.* spp. (F. hodginii), *Juniperus L. spp., Libocedrus Endl. spp., Microbiota Kom.* spp. (M. decussata), *Neocallitropsis Florin. spp.* (*N. pancheri*)*, Pilgerodendron Florin. spp.* (P. uviferum), Tetraclinis Mast. spp. (*T. articulata*)*, Thuja L. spp., Thujopsis Siebold & Zucc. ex Endl.* spp. (*T. dolabrata*)*, Widdringtonia Endl. spp*.; from the family *Pinaceae,* for example, *Abies Mill. Ca. spp., Cathaya Chun & Kuang. spp.* (C. argyrophylla Chun & Kuang), *Cedrus Trew. spp., Keteleeria Carriere. spp., Larix Mill. spp., Nothotsuga Hu ex C.N.Page. spp. (N. longibracteata), Picea A.Dietr. spp., Pinus L. spp.,Pseudolarix Gordon. spp. (P. amabilis), Pseudotsuga Carriere.* spp., *Tsuga Carriere.* spp.; from the family *Podocarpaceae,* for example, *Acmopyle Pilg. spp., Dacrycarpus* (*Endl.*) *de Laub. spp., Dacrydium Lamb. spp., Falcatifolium de Laub. spp..;* from the family *Taxaceae,* for example, Amentotaxus Pilg. spp., *Taxus L.* spp., *Torreya Arn*. spp.; from the family *Taxodiaceae,* for example, *Athrotaxis D.Don.* spp., *Cryptomeria D.Don. spp.* (especially *Cryptomeria japonica), Cunninghamia R.Br. spp.; Glyptostrobus Endl. spp. (G. pensilis); Sciadopitys Siebold & Zucc. spp.* (*S. verticillata*)*, Sequoia Endl. spp.* (*S. sempervirens*)*, Sequoiadendron Buchholz. spp.* (*S. giganteum*)*, Taiwania Hayata. spp., Taxodium Rich. spp;* from the family Phyllocladaceae, for example, *Phyllocladus Rich. ex Mirb.* spp.
   The compounds of the formula [CI] can have the following tautomeric structures: 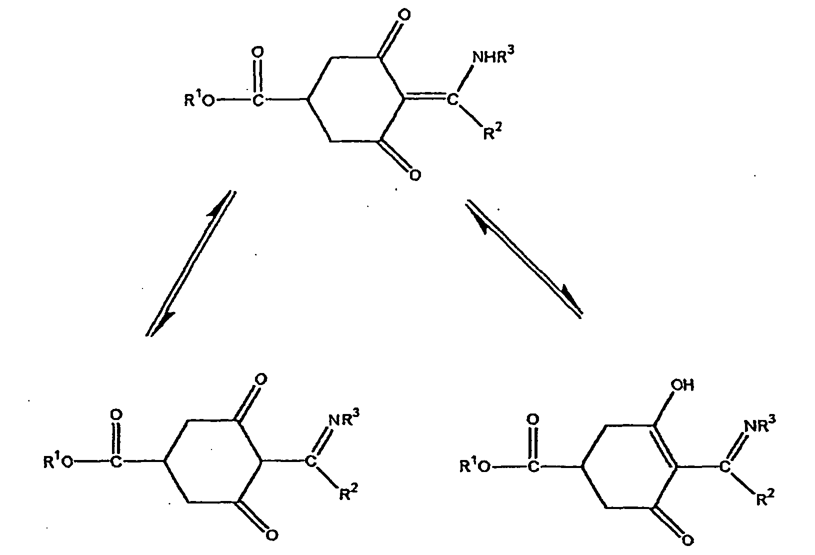
   Further, the compounds of the formula CI can form salts thereof, which are also included in the scope of the present invention.
   Concrete examples of the above-described compounds are shown below. 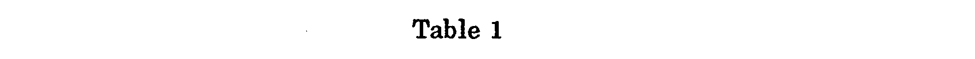 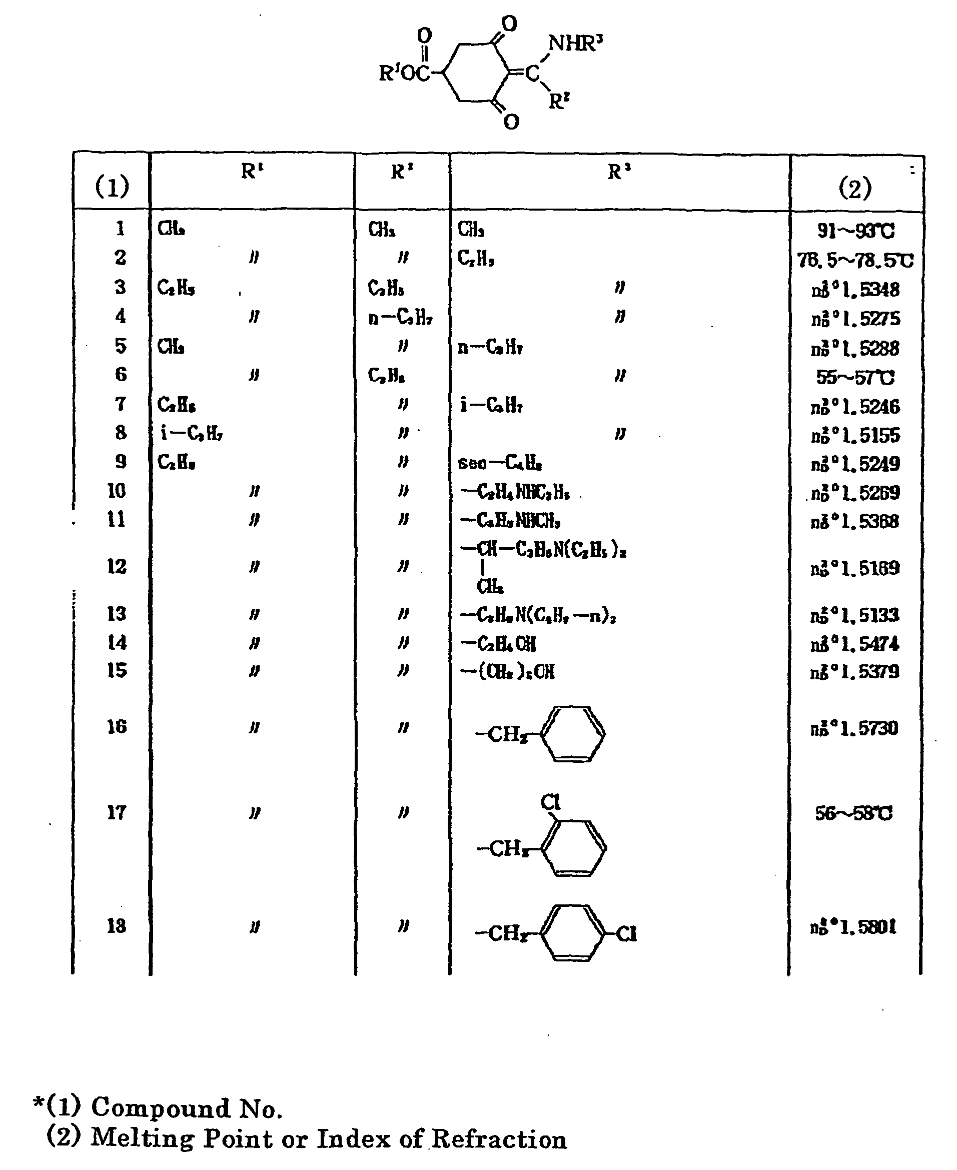 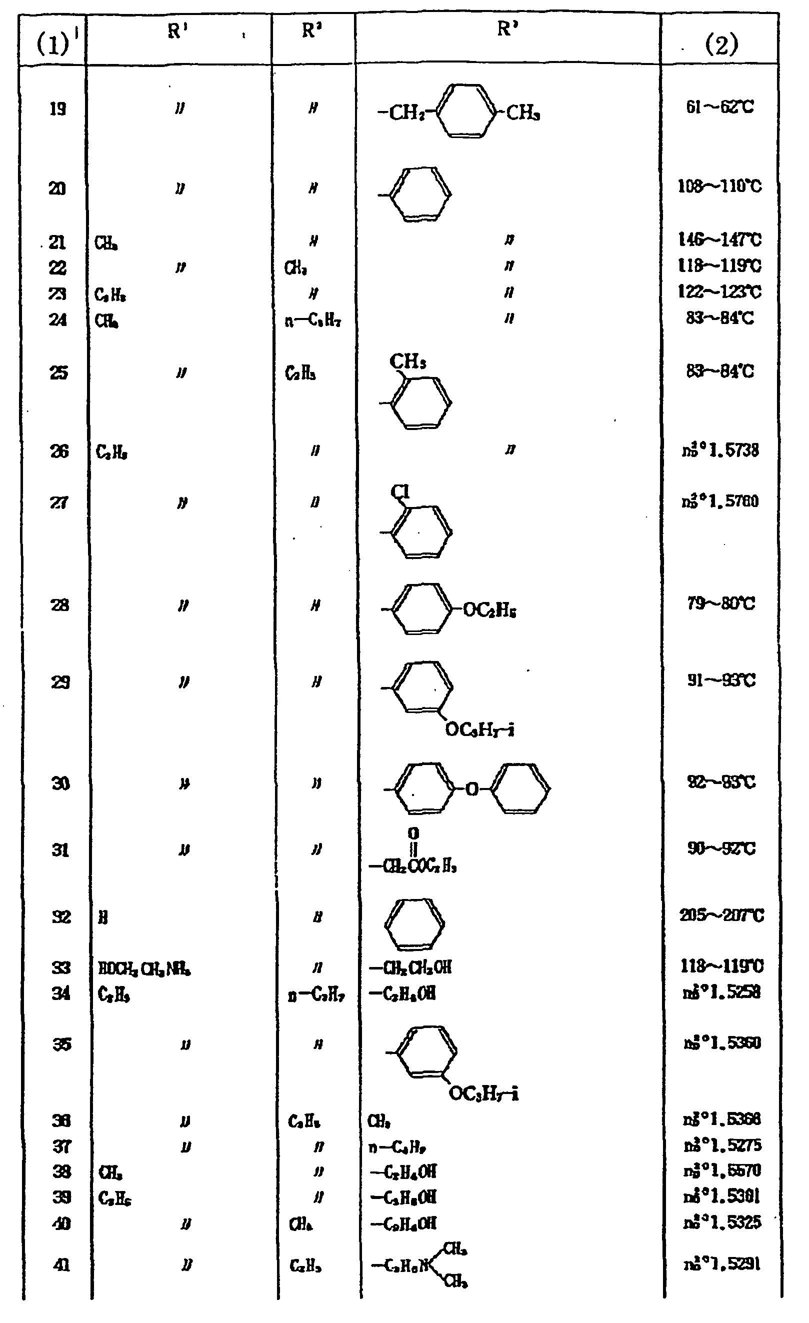 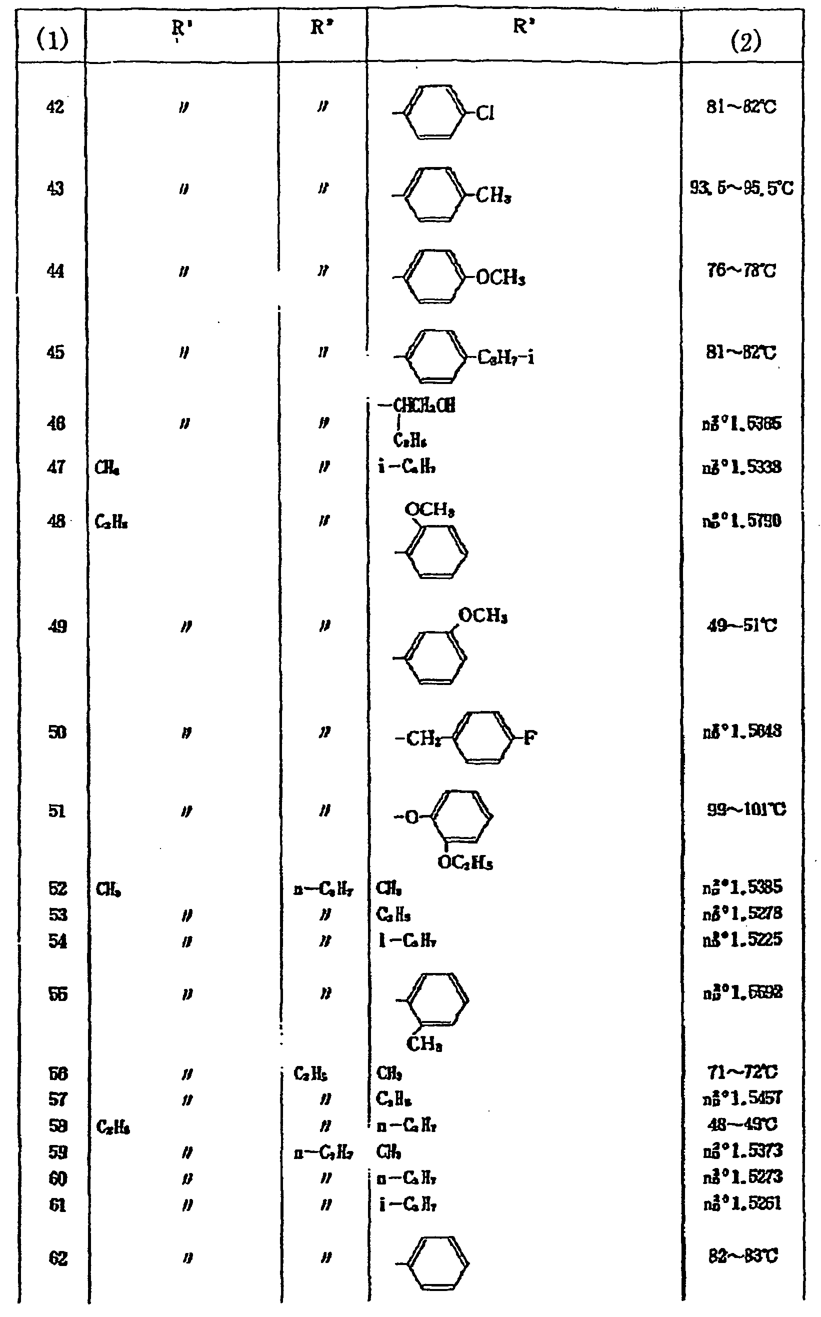 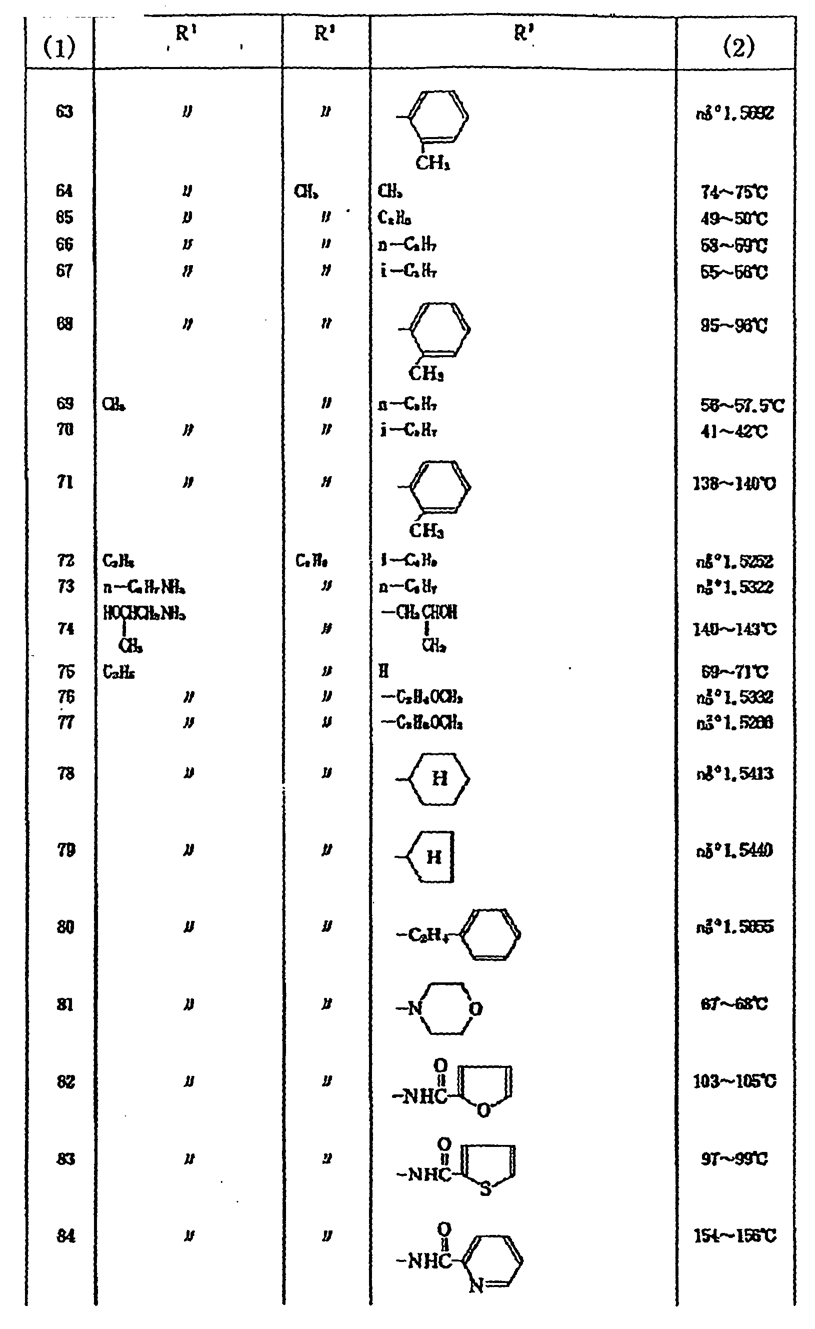 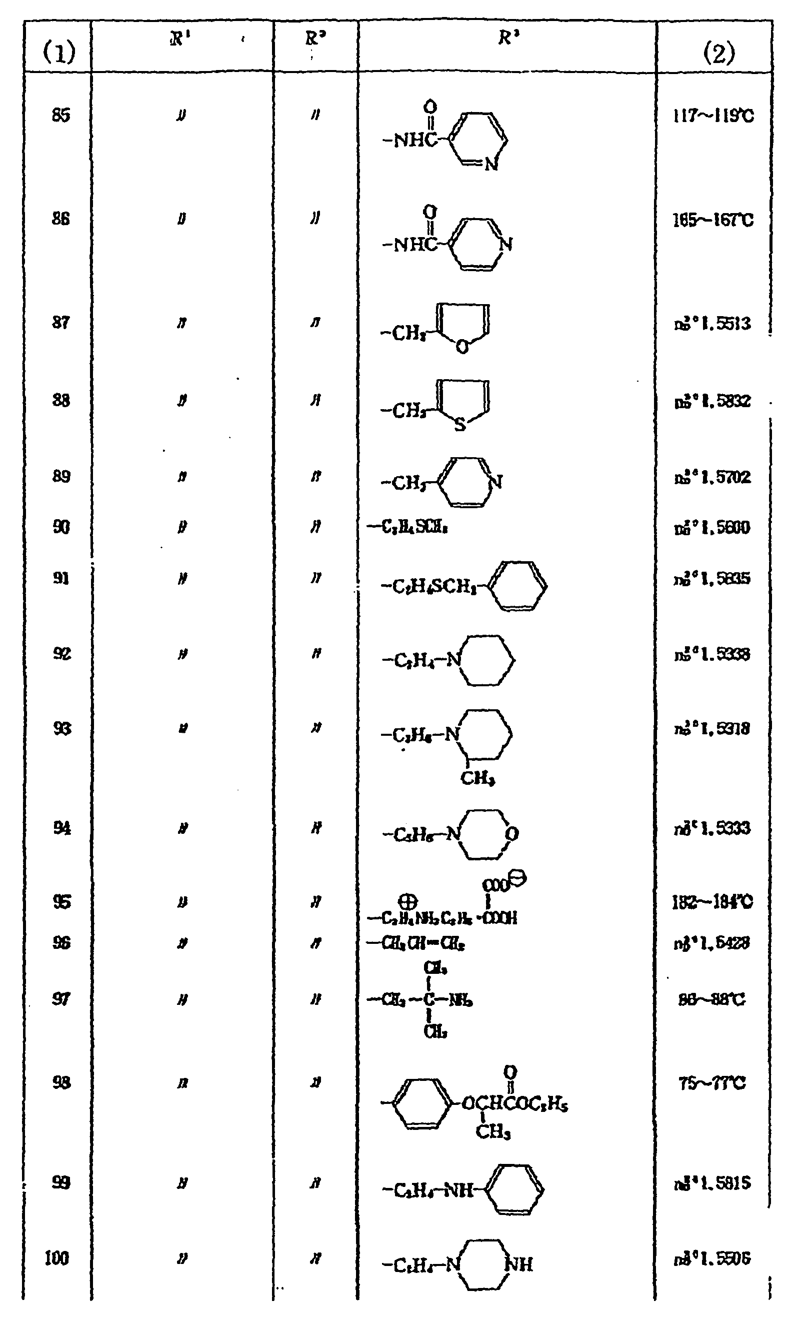 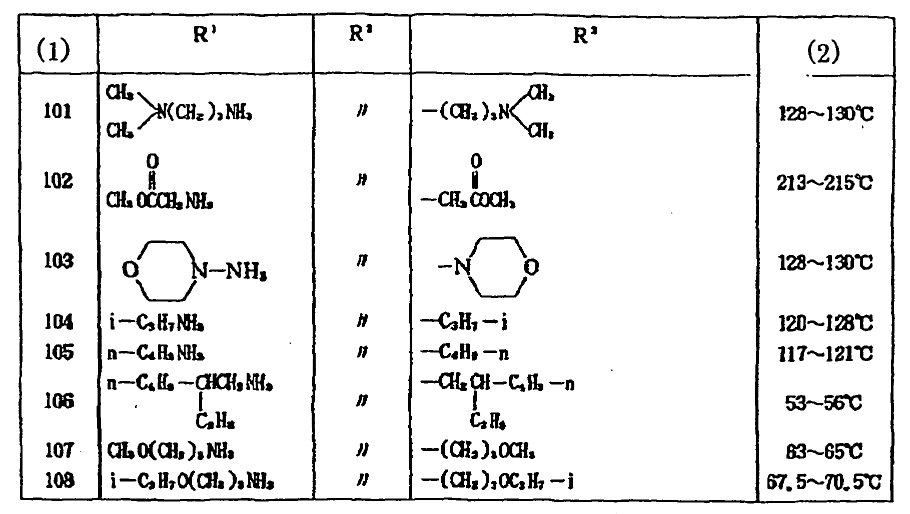
   Compounds of the above formula CI can be produced by, for example, the following method: 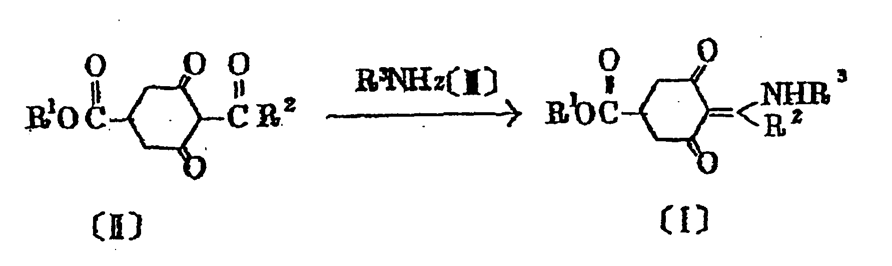 wherein R¹, R² and R³ are as defined above. However, when R¹ in the formula [II] is hydrogen atom, R¹ in the formula [I] represents R³NH₃. Further, when R¹ in the formula [II] is a hydrogen atom and R³ in the formulae [I] and [III] represents a group of the following formula: 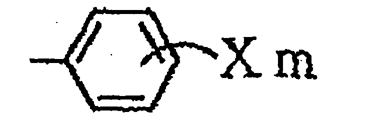 wherein X and m are as defined above,
   R¹ in the formula [I] represents a hydrogen atom.
   Namely, the intended compounds can be produced by reacting a compound of the formula [II] with an amine of the formula [III] in a solvent or without any solvent at a temperature in the range of room temperature to the boiling point of the solvent for 0.1 to 10 hours. The solvents include alcoholic solvents such as methanol and ethanol, nonpolar solvents such as benzene, toluene and xylene; acetic ester solvents such as methyl acetate and ethyl acetate, and halogenated hydrocarbon solvents such as dichloromethane and chloroform.
(IV) Cyclohexanecarboxylic acid derivatives of the following formula DI and salts thereof: 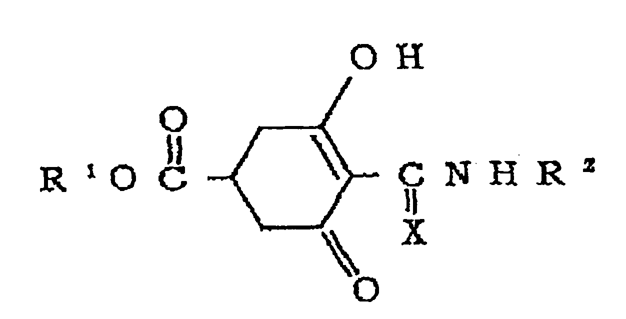 wherein R¹ represents a hydrogen atom, a lower alkyl group or phenyl group, X represents an oxygen atom or a sulfur atom, R² represents a hydrogen atom, an alkyl group, an alkenyl group, an alkylthioalkyl group, an alkoxycarbonylmethyl group, a benzyl group substituted with a halogen atom, a group of the formula: 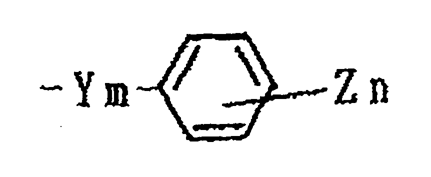 (wherein Y represents a carbonyl group, a sulfonyl group or a sulfonate group, Z represents a hydrogen atom, a halogen atom, a lower alkyl group, a lower alkoxyl group, a cyano group or a trifluoromethyl group, m represents 0 or 1, and n represents an integer of 1 or 2, with the proviso that when n represents 2, Z may be a combination of different groups or atoms),
   a furyl group or a thienyl group.

Those compounds are disclosed in Japanese Patent No. 2,696,252. However, the specification thereof discloses only herbicides and plant growth regulators containing those compounds and it does not disclose nor suggest any use of those compounds as agents for inhibiting the formation of Cryptomeria japonica pollen, which do not substantially inhibit the elongation growth of Cryptomeria japonica trees and which have an excellent effect of inhibiting the formation of male flowers thereof.

Examples of the compounds of the above formula DI are shown in Table 2.

**Table 2**

| | | | | |
|---|---|---|---|---|
| 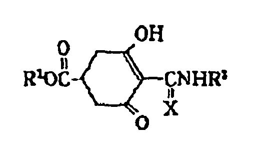 | | | | |

| (3) | R¹ | X | R² | (4) |
|---|---|---|---|---|
| 1 | H | O | 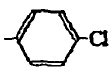 | 223-225 |
| 2 | CH₃ | O | H | 115-118 |
| 3 | CH₃ | O | CH₃ | 101-102 |
| 4 | CH₃ | O | C₂H₇ | 47-49 |
| 5 | CH₃ | O | C₂H₇-n | 68-69 |
| 6 | CH₄ | O | C₃H₇-i | 43-45 |
| 7 | CH₃ | O | CH₂CH=CH₂ | 68-69 |
| 8 | CH₃ | O | C₄H₇-n | 47-48 |
| 9 | CH₃ | O | CH₃CH₃SCH₃ | 52-54 |
| 10 | CH₃ | O | CH₃OCOC₃H₆ | 69-71 |
| 11 | CH₃ | O | 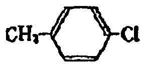 | 112-114 |
| 12 | CH₃ | S | CH₃ | 73-74 |
| 13 | CH₃ | S | C₂H₃ | 59-60 |
| 14 | CH₃ | S | CH₂CH=CH₂ | 1.5816 |
| 15 | CH₃ | O | 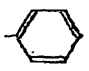 | 122-123 |
| 18 | CH₃ | O | 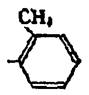 | 113-114 |
| 17 | CH₃ | O | 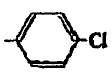 | 155-156 |
| 18 | CH₃ | O | 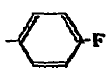 | 121-122 |
| 19 | CH₃ | O | 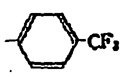 | 160-162 |
| 20 | CH₃ | O | 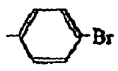 | 154-155 |
| 21 | CH₃ | O | 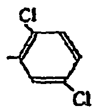 | 122-123 |
| 22 | CH₃ | O | 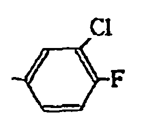 | 128-130 |
| 23 | CH₃ | O | 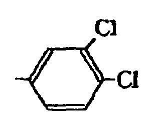 | 140-141 |
| 24 | CH₃ | O | 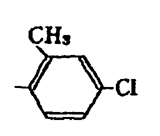 | 140-142 |
| 25 | CH₃ | O | 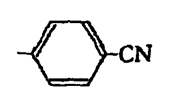 | 151-153 |
| 26 | CH₃ | O | 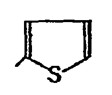 | 134-136 |
| 27 | CH₃ | O | 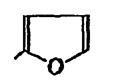 | 90-91 |
| 28 | CH₃ | S | 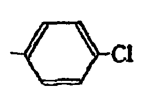 | 110-112 |
| 29 | C₂H₅ | O | 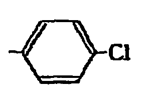 | 166-167 |
| 30 | 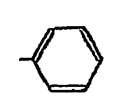 | O | 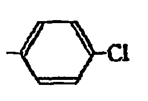 | 157-158 |
| 31 | CH₃ | O | 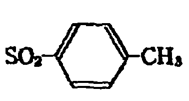 | 149-151 |
| 32 | CH₃ | O | 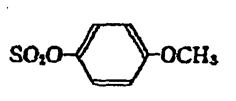 | 1.5485 |
| 33 | CH₃ | O | 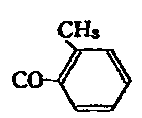 | 96-98 |

| | | | | |
|---|---|---|---|---|
| *(3) Compound No. (4) Melting Point (°C) or Index of Refraction | | | | |

Those compounds can be produced by, for example, the following method: 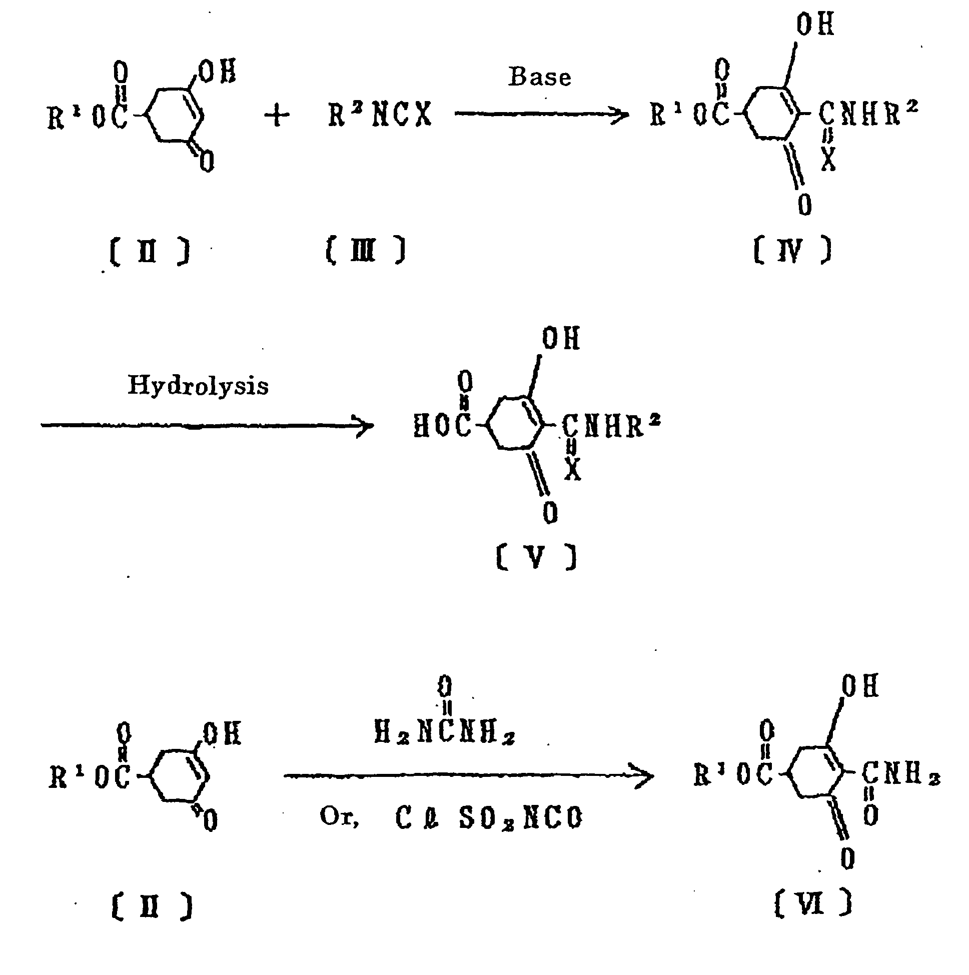 wherein R¹, R² and X are as defined above.

Namely, the compounds of the general formula [IV] can be obtained by reacting a compound of the formula [II] with an isocyanate or isothiocyanate of the formula [III] in the presence of a base in a solvent or without any solvent and then depositing the product with an acid. The compounds of the formula [V] can be easily obtained from the compounds of the formula [IV] by treating the latter with an aqueous alkali solution. The compounds of the formula [VI] can be easily obtained by reacting a compound of the formula [II] with urea, chlorosulfonyl isocyanate or the like. Those reactions are conducted at a temperature of, for example, 0 to 130°C, preferably 20 to 80°C. However, the reaction of a compound of the formula [II] with urea is desirably conducted without any solvent at 100 to 130°C.

The preferred bases include inorganic bases such as sodium hydroxide, potassium hydroxide, metallic sodium, sodium hydride, potassium carbonate and sodium hydrogencarbonate; and tertiary organic amines such as trimethylamine, triethylamine, N,N-dimethylaniline, pyridine, substituted pyridines and diazabicycloundecene (DBU). The solvents are suitably selected from those which do not participate in the reaction, such as N,N-dimethylformamide, N,N-dimethylacetamide, dimethyl sulfoxide, hexamethylene phosphoroamide, acetonitrile, tetrahydrofuran, benzene, toluene, xylene, ethyl ether, dichloromethane, dichloroethane and chloroform. The compounds represented by the formula [II] are well known and processes for producing them are described in, for example, the specifications of JP Kokai Nos. Sho 58-164543 and Sho 59-231045.

The prohexadione compounds of the present invention are used as they are or preferably in the form of a composition with an ordinary adjuvant used in the preparation techniques. These compounds are used to form, for example, an undiluted emulsion, a film-forming paste, a solution which can be directly sprayed or diluted, a diluted emulsion, a wettable powder, a water-soluble powder, a dust, granules and capsules prepared by the encapsulation with a polymer. The properties of the composition and also the method for the application thereof such as spraying, dusting, sprinkling or injection are selected depending on the Cryptomeria japonica and the environmental conditions.

When the agent of the present invention for inhibiting the formation of Cryptomeria japonica pollen is to be applied to Cryptomeria japonica trees in a large area of at least several ares such as in an afforested area, for example, curtain application method with a helicopter is suitable.

A suitable solid or liquid adjuvant may be used, if necessary, together with the prohexadione compound. Such a preparation or composition is produced by, for example, homogeneously mixing and/or grinding the prohexadione compound as the active ingredient with a filler such as a solvent, a solid carrier and, if necessary, a surface-activating compound (surfactant) by a well-known method.

The suitable solvents are as follows:
aromatic hydrocarbons preferably having 8 to 12 carbon atoms such as xylene mixtures and substituted naphthalene; phthalates such as dibutyl phthalate and dioctyl phthalate; aliphatic hydrocarbons such as cyclohexane and paraffin; alcohols and glycols and their ethers and esters such as ethanol, ethylene glycol monomethyl or monoethyl ether; ketones such as cyclohexanone; strong polar solvents such as N-methyl-2-pyrrolidone, dimethyl sulfoxide and dimethylformamide; epoxidized vegetable oils such as epoxidized coconut oil and epoxidized soybean oil; and water.

Solid carriers usable for the dusts and dispersible powders are usually preferably natural mineral fillers such as calcite, talc, kaolin, montmorillonite and attapulgite. For improving the physical properties of the preparation, for example, highly dispersible silicic acid or highly dispersible, absorbable polymer can be added thereto. The suitable granulated absorbing carriers are porous ones such as pumice, crushed bricks, sepiolite and bentonite. The suitable non-absorbing carriers are, for example, calcite and sands. Further, various, previously granulated inorganic and organic substances, particularly dolomite and pulverized plant residues are preferred.

Suitable surface-activating compounds, which vary depending on the properties of the prohexadione compounds of the present invention, are non-ionic, cationic and anionic surfactants having excellent emulsifying property, dispersing property and wetting property.

The term "surfactants" also includes surfactant mixtures.

Suitable anionic surfactants are, for example, water-soluble soaps, water-soluble synthetic surface-activating compounds and mixtures of them.

Suitable soaps are, for example, alkali metal salts, alkaline earth metal salts and unsubstituted or substituted ammonium salts of higher fatty acids (C10 to C12); such as sodium and potassium salts of oleic acid, stearic acid and natural fatty acid mixtures obtained from coconut oil and tallow. Methyltaurine salts of fatty acids are also usable.

So-called synthetic surfactants such as aliphatic sulfonates, aliphatic sulfates, sulfonated benzimidazole derivatives and alkylaryl sulfonates are often used.

The aliphatic sulfonates and sulfates are usually in the form of alkali metal salts, alkaline earth metal salts and unsubstituted or substituted ammonium salts thereof. They contain an alkyl group having 8 to 22 carbon atoms including the alkyl moiety of the acyl groups thereof. Examples of them include sodium and calcium salts of lignosulfonic acid, dodecyl sulfate and aliphatic alcohol sulfates obtained from natural fatty acids. Those compounds include salts of sulfuric acid esters and sulfonic acid salts of aliphatic alcohol/ethylene oxide adducts. Sulfonated benzimidazole derivatives preferably contain two sulfonic acid groups and a fatty acid group containing 8 to 22 carbon atoms. Examples of the alkylaryl sulfonates include sodium, calcium and triethanolamine salts of dodecylbenzenesulfonic acid or naphthalenesulfonic acid/formaldehyde condensate. Corresponding phosphates such as salts of phosphoric acid esters of p-nonylphenol adducts containing 4 to 14 mols of ethylene oxide, and phospholipids are also suitable.

The nonionic surfactants are preferably polyglycol ether derivatives of aliphatic or alicyclic alcohols or saturated or unsaturated fatty acid alkylphenols. Those derivatives contain 3 to 30 glycol ether groups, 8 to 20 carbon atoms in the (aliphatic) hydrocarbon moiety and 6 to 18 carbon atoms in the alkyl moiety of the alkylphenol.

Other suitable nonionic surfactants are, for example, water-soluble adducts of polyethylene oxide and polypropylene glycol, ethylenediaminepolypropylene glycol or an alkylpolypropylene glycol having 1 to 10 carbon atoms in the alkyl chain. The adducts contain, for example, 20 to 250 ethylene glycol ether groups and 10 to 100 propylene glycol ether groups. These compounds usually contain 1 to 5 ethylene glycol units per propylene glycol unit.

Typical examples of the nonionic surfactants include nonyl phenol/polyethoxyethanol, castor oil polyglycol ether, polypropylene/polyethylene oxide adduct, tributylphenoxypolyethoxyethanol, polyethylene glycol and octylphenoxyethoxyethanol. Further, fatty acid esters of polyoxyethylenesorbitans and polyoxyethylenesorbitan trioleates are also suitable nonionic surfactants.

The cationic surfactants are preferably quaternary ammonium salts having at least one alkyl group having 8 to 22 carbon atoms as the N-substituent and also an unsubstituted or halogenated lower alkyl group, benzyl group or a lower hydroxyalkyl group as the other substituent. The salts are preferably halides, methyl sulfates or ethyl sulfates. They are, for example, stearyltrimethylammonium chloride and benzyl di-(2-chloroethyl)ethylammonium bromide.

The surfactants usually used in the pharmaceutical field are described in, for example, the following publications: Mc Cutcheon's Detergents and Emulsifiers Annual, Mac Publishing Co., Lingwood, New Jersey, 1981; H. Stache, Tensid-Tashen-buch, 2nd Edition, C. Hanser Verlag, Munchen and Vienna, 1981; M. and J. Ash, Encyclopedia of Surfactants, Vols. I to II, Chemical Publishing Co., New York, 1980-1981.

The agent of the present invention for inhibiting the formation of Cryptomeria japonica pollen usually contains 0.1 to 95 %, preferably 0.1 to 80 %, of a prohexadione compound, 1 to 99.9 % of solid or liquid adjuvants and 0 to 25 %, preferably 0.1 to 25 %, of a surfactant.

Preferred preparations are those comprising the following components (the percentages are given by mass):

### Undiluted emulsion

| | |
|---|---|
| active ingredient: | 10 to 20 %, preferably 5 to 10 % |
| surfactant : | 5 to 30 %, preferably 10 to 20 % |
| liquid carrier : | 50 to 94 %, preferably 70 to 85 % |

### Dust

| | |
|---|---|
| active ingredient: | 0.1 to 10 %, preferably 0.1 to 1 % |
| solid carrier : | 99.9 to 90 %, preferably 99.9 to 99 % |

### Undiluted suspension

| | |
|---|---|
| active ingredient: | 5 to 75 %, preferably 10 to 60 % |
| water : | 94 to 2.5 %, preferably 90 to 30 % |
| surfactant : | 1 to 40 %, preferably 2 to 30 % |

### Wettable powder

| | |
|---|---|
| active ingredient: | 0.5 to 90 %, preferably 1 to 60 % |
| surfactant : | 0. 5 to 20 %, preferably 1 to 15 % |
| solid carrier | 5 to 90 %, preferably 15 to 90 % |

### Granules

| | |
|---|---|
| active ingredient: | 0.5 to 30 %, preferably 3 to 15 % |
| solid carrier : | 99. 5 to 70 %, preferably 97 to 85 % |

The prohexadione compounds may be formulated in the form of a concentrated preparation. In this case, the users usually dilute the concentrated preparation before use.

The preparation can be diluted to a concentration as low as 0.001 %. The application rate is usually 0.01 to 10 kg active ingredient (a. i.)/ba, preferably 0.025 to 5 kg a.i./ba.

If necessary, the preparation or the composition thereof can contain other components such as a stabilizer, an antifoaming agent, a viscosity modifier, a binder, a thickening agent, a fertilizer and other active ingredients having other special effects.

The following Examples and Comparative Examples will further illustrate the present invention.

### Example 1

Effect of a prohexadione compound of the following chemical structure on 8-year old young Cryptomeria japonica trees:

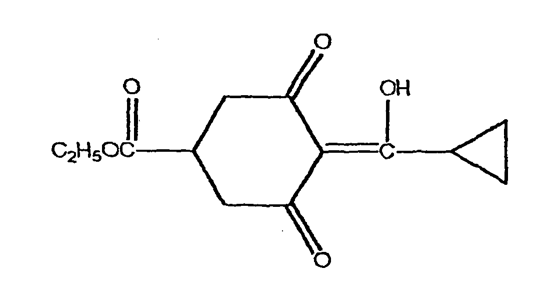

### (Materials and method)

Two 8-year old young Cryptomeria japonica trees (height: 8 m, diameter at breast height: 6 cm) which were in a nursery of an experimental plantation of the department of agriculture of Tottori University and which had formed male flowers every year were used. Three branches were selected at male flower-forming positions of each tree. These branches which were supposed to form the male flowers were treated with the prohexadione compound (treatment with the undiluted powder) on June 5, 2001 (about one month before the beginning of July when Cryptomeria japonica flower buds were supposed to differentiate and Cryptomeria japonica flower buds were supposed to be formed). In this test, the prohexadione compound was diluted to a concentration shown in Table 3 given below with 60 % (v/v) aqueous acetone solution.

The treatment method was as follows: 100 ml of the diluted solution obtained as described above was sprayed on leaves of the branches (50 cm long area from the branch top) with a hand sprayer. In a control group, the leaves were treated with only 60 % (v/v) aqueous acetone solution.

The concentrations of the prohexadione compound used for the foliar spray treatment were as follows:

| Concentration (ppm) |
|---|
| 0.5 |
| 5 |
| 50 |
| 500 |

### Results

### (1) Effect on the differentiation and formation of male Cryptomeria japonica flowers

Table 4 given below shows the effect of the treatment with the undiluted prohexadione compound on the male flower formation of the 8-year old young Cryptomeria japonica trees. It will be clear from Table 4 that the differentiation and formation of male flower buds were remarkable in the control group. On the other hand, when the agent of the present invention for inhibiting the formation of Cryptomeria japonica pollen was used, the differentiation and formation of male flower buds were inhibited. Particularly when the concentration of the prohexadione compound used for the treatment was 50 ppm or 500 ppm, the effect of inhibiting the differentiation and formation of male Cryptomeria japonica flowers was remarkable.

### (2) Effect on the elongation growth of Cryptomeria japonica branches:

Table 5 given below shows the effect of the treatment with the prohexadione compound on the elongation growth of branches of the 8-year old young Cryptomeria japonica trees. It will be clear from Table 5 that even when the agent for inhibiting the formation of Cryptomeria japonica pollen, of the present invention, was used, the elongation growth of the Cryptomeria japonica branches was substantially unchanged almost like that in the control group.

From the above-described facts, it will be clear that although the agent for inhibiting the formation of Cryptomeria japonica pollen, of the present invention, specifically and remarkably inhibits the differentiation and formation of male flower buds, the agent exerts substantially no influence on the elongation growth of the Cryptomeria japonica branches.

**Table 4**

| Effect of the agent for inhibiting the formation of Cryptomeria japonica pollen, of the present invention, on the differentiation and formation of male flowers of 8-year old young Cryptomeria japonica trees | |
|---|---|
| Concentration of the undiluted product (ppm) | Number of male flower clusters |
| Control group | 136.9±21.6 |
| 0.5 | 111.6±25.2 |
| 5 | 70.4±12.4 |
| 50 | 21.2 ±6.5 |
| 500 | 10.8±6.1 |

**Table 5**

| Effect of the agent for inhibiting the formation of Cryptomeria japonica pollen, of the present invention, on the elongation growth of branches of 8-year young Cryptomeria japonica trees | |
|---|---|
| Concentration of the undiluted product (ppm) | Branches Elongation (cm) |
| Control group | 24.6±6.4 |
| 0.5 | 25.5±7.2 |
| 5 | 26.2±6.5 |
| 50 | 24.3±6.3 |
| 500 | 25.2±5.5 |

### Example 2

### Effect of the aerial application of the agent for inhibiting the formation of Cryptomeria japonica pollen, of the present invention, on the 43-year old Cryptomeria japonica trees

The effect of the agent for inhibiting the formation of Cryptomeria japonica pollen, of the present invention, applied with a helicopter was examined for the purpose of realizing the practical use thereof.

### (Materials and method)

A Cryptomeria japonica forest having 43-year old Cryptomeria japonica trees (height: 16 m, diameter at breast height: 35 cm) was treated in Nirayama experimental plantation of the department of agriculture of Tottori University on June 25, 2001.

The agent for inhibiting the formation, of Cryptomeria japonica pollen, thus used had a composition shown in Table 6 given below. The concentration of the agent for inhibiting the formation of Cryptomeria japonica pollen thus sprayed was 50 or 500 ppm.

**Table 6**

| Composition and concentration of the agent for inhibiting the formation of Cryptomeria japonica pollen | | |
|---|---|---|
| Agent for inhibiting the formation of Cryptomeria japonica pollen | Concentration (ppm) | |
| | 50 | 500 |
| Composition | Amount (mass %) | |
| undiluted product used in Example 1 | 0.005 | 0.05 |
| polyoxyethylene castor oil | 0.0175 | 0.175 |
| tetrahydrofurfuryl alcohol | 0.0272 | 0.275 |
| water | 99.95 | 99.5 |

1.8 liters of each of the above described two compositions was applied to the forest having an area of 10 a by the curtain application method with a helicopter. The aerial application was conducted twice, using 0.9 liter of the composition each time. In a control group, only water free from the active ingredients was used for the aerial application.

### Results

### (1) Effect on the differentiation and formation of male Cryptomeria japonica flowers

Table 7 given below shows the effects of the agent for inhibiting the formation of Cryptomeria japonica pollen on the differentiation and formation of male Cryptomeria japonica flowers of 43-year old Cryptomeria japonica trees.

It will be clear from Table 7 that an excellent effect of inhibiting the differentiation and formation of the male Cryptomeria japonica flowers was confirmed after the treatment with the agent for inhibiting the formation of Cryptomeria japonica pollen, of the present invention, while the serious differentiation and formation of the male flowers were observed in the control group. Particularly when the concentration of the agent was 50 ppm or 500 ppm, the remarkable effect of inhibiting the differentiation and formation of the male flowers was obtained. From those results, it is apparent that the differentiation and formation of the male Cryptomeria japonica flowers can be remarkably inhibited by the aerial application of the agent for inhibiting Cryptomeria japonica pollen formation, of the present invention, with a helicopter.

### (2) Effect on elongation growth of terminal bud of Cryptomeria japonica

Table 8 given below shows the effect of the agent for inhibiting Cryptomeria japonica pollen formation on the elongation growth of 43 year-old Cryptomeria japonica trees.

Even when the agent for inhibiting Cryptomeria japonica pollen formation, of the present invention, was sprayed, the elongation growth of the Cryptomeria japonica trees in old stage was substantially the same as that in the control group. It is thus clear that the agent exerts substantially no influence on the elongation growth.

Thus, when the agent for inhibiting Cryptomeria japonica pollen formation, of the present invention, is used according to the aerial application with a helicopter, the differentiation and formation of buds of male Cryptomeria japonica flowers can be remarkably inhibited without substantially exerting no effect on the elongation growth of the Cryptomeria japonica trees.

**Table 7**

| Effect of the agent for inhibiting the formation of Cryptomeria japonica pollen, of the present invention, on the differentiation and formation of male flowers of 43-year old Cryptomeria japonica trees in the field | |
|---|---|
| Concentration of the undiluted product (ppm) | Number of male flower clusters |
| Control group | 2985.8±789.1 |
| 50 | 751.3±121.5 |
| 500 | 124.2±55.2 |

**Table 8**

| Effect of the agent for inhibiting the formation of Cryptomeria japonica pollen, of the present invention, on the shoot elongation growth of 43-year old Cryptomeria japonica trees in the field | |
|---|---|
| Concentration of the technical product (ppm) | Shoot Elongation (cm) |
| Control group | 80.8±9.4 |
| 50 | 83.3±10.7 |
| 500 | 82.8±11.2 |

### Example 3

### Effect of prohexadione compound having the following chemical structure on 7-year old young Cryptomeria japonica trees

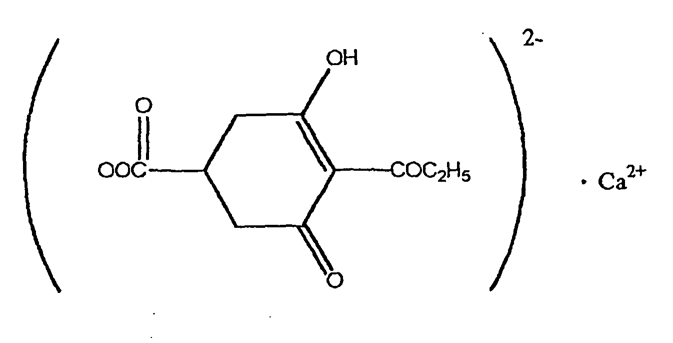

### (Materials and method)

Two 7-year old young Cryptomeria japonica trees (height: 7.5 m, diameter at breast height: 5.4 cm) which were in a nursery of an experimental plantation of the department of agriculture of Tottori University and which had differentiated and formed male flowers every year were used. Three branches were selected at male flower-forming positions of each tree. These branches (50 cm long area from the branch top) which were supposed to form the male flowers were treated with the prohexadione compound on June 3, 2000 (about one month before the beginning of July when Cryptomeria japonica flowers were supposed to be formed). In this test, the undiluted prohexadione compound of the present invention shown in Table 9 given below was diluted with 60 % (v/v) aqueous acetone solution to an intended concentration. 100 ml of the diluted solution of the prohexadione compound was sprayed on leaves of the branches with a hand sprayer. In a control group, the leaves were treated with only 60 % (v/v) aqueous acetone solution.

Concentrations of the undiluted product used for the foliar spray treatment:

| Concentration (ppm) |
|---|
| 5 |
| 50 |
| 500 |

### Results

Table 10 shows the effect of the agent for inhibiting Cryptomeria japonica pollen formation, of the present invention, on the differentiation and formation of male flowers of 7-year old young Cryptomeria japonica trees. It is clear from Table 10 that the excellent effect of inhibiting the differentiation and formation of the male Cryptomeria japonica flowers was confirmed after the treatment with the agent for inhibiting the formation of Cryptomeria japonica pollen, of the present invention, while the serious differentiation and formation of the male flowers were observed in the control group. Particularly when the concentration of the agent was 50 ppm or 500 ppm, the remarkable effect of inhibiting the differentiation and formation of the male Cryptomeria japonica flowers was obtained.

Table 11 shows the effect obtained by the treatment with the agent for inhibiting Cryptomeria japonica pollen formation, of the present invention, on the elongation growth of the branches of the 7-year old young Cryptomeria japonica trees. It is clear from Table 11 that even when the agent for inhibiting Cryptomeria japonica pollen formation, of the present invention, was used for the treatment, no effect was observed on the elongation growth of the Cryptomeria japonica branches as in the control group.

It is thus clear that the agent for inhibiting the formation of Cryptomeria japonica pollen, of the present invention, is excellent in inhibiting the male flower formation and it exerts substantially no influence on the elongation growth of the Cryptomeria japonica trees.

**Table 10**

| Effect of the agent for inhibiting the formation of Cryptomeria japonica pollen, of the present invention, on the differentiation and formation of male flowers of 7-year old young Cryptomeria japonica trees | |
|---|---|
| Concentration of the undiluted product (ppm) | Number of formed male flowers (clusters) |
| Control group | 107.6±18.9 |
| 5 | 75.1±15.2 |
| 50 | 29.3±8.2 |
| 500 | 7.8±3.5 |

**Table 11**

| Effect of the agent for inhibiting the formation of Cryptomeria japonica pollen, of the present invention, on the shoot elongation growth of branches of 7-year old young Cryptomeria japonica trees | |
|---|---|
| Concentration of the undiluted product (ppm) | Shoot Elongation (cm) |
| Control group | 23.5±3.4 |
| 5 | 21.5±4.9 |
| 50 | 22.2±7.7 |
| 500 | 23.2±5.1 |

According to the present invention, the agent for inhibiting the formation of Cryptomeria japonica pollen effective in inhibiting the formation of the male flowers without substantially inhibiting the elongation growth of the Cryptomeria japonica trees can be obtained.

## Claims

1. A method for inhibiting the formation of Coniferophyta pollen, which comprises applying a pollinosis inhibiting effective amount of a composition comprising a prohexadione compound as an active ingredient to the Coniferophyta plant to be treated.

2. The method according to claim 1, wherein said prohexadione compound is a cyclohexanedionecarboxylic acid derivative of the following formula (AI) or a salt thereof: 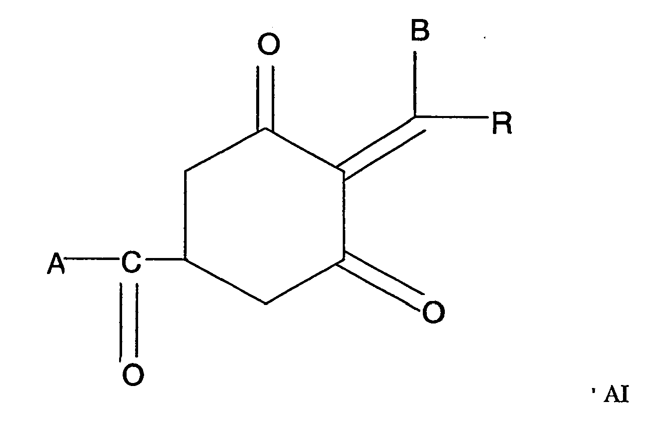 wherein A represents -OR₂ or -NR₃R₄,
B represents a hydroxyl group, and -NHOR₁ group or a metal salt or ammonium salt thereof,
R represents an alkyl group having 1 to 6 carbon atoms or a cycloalkyl group having 3 to 6 carbon atoms,
R₁ represents an alkyl group having 1 to 6 carbon atoms, a haloalkyl group having 1 to 6 carbon atoms, an alkenyl group having 3 to 6 carbon atoms, a haloalkenyl group having 3 to 6 carbon atoms or an alkynyl group having 3 to 6 carbon atoms, and
R₂, R₃ and R₄ independently represent a hydrogen atom, an alkyl group having 1 to 6 carbon atoms, a haloalkyl group having 1 to 6 carbon atoms, an alkoxyalkyl group having 2 to 10 carbon atoms, an alkylthioalkyl group having 2 to 10 carbon atoms, an alkenyl group having 3 go 6 carbon atoms, an alkynyl group having 5 or 6 carbon atoms, or a phenyl group or an aralkyl group having 1 to 6 carbons, and
R₃ and R₄ may form a 5- or 6-membered heterocyclic ring together with the nitrogen atom to which they are bonded and the ring may further-contain a carbon atom or sulfur atom.

3. The method according to claim 2, wherein A in the formula (AI) represents an -OR₂ group.

4. The method according to claim 2, wherein A in the formula (AI) represents an-NR₃R₄ group.

5. The method according to claim 2, wherein R in the formula (AI) represents a cycloalkyl group having 3 to 6 carbon atoms.

6. The method according to claim 2, wherein said prohexadione compound is represented by the following formula AIa:

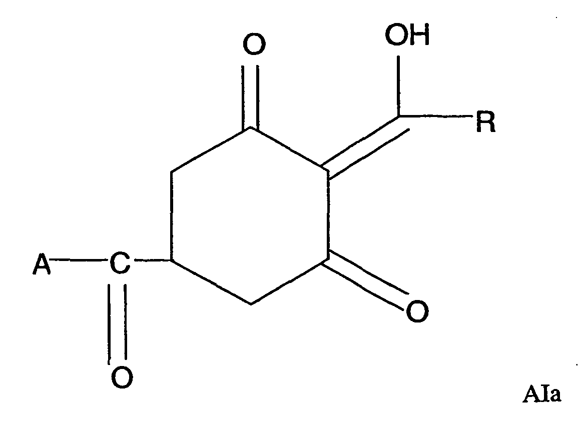

7. The method according to claim 1, wherein said prohexadione compound is represented by the following formula BI: 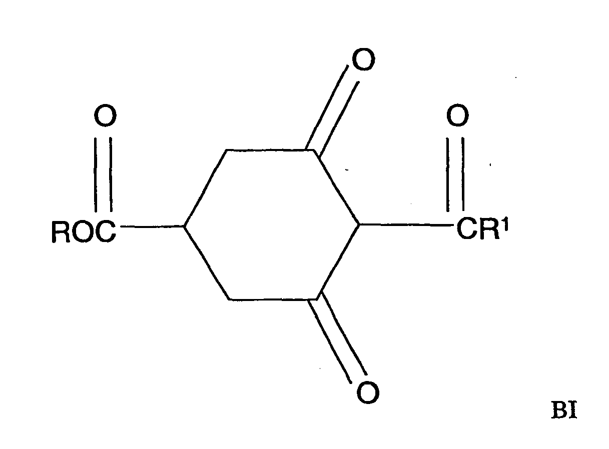 wherein R represents a hydrogen atom or an alkyl group, and R¹ represents an alkyl group.

8. The method according to claim 1, wherein said prohexadione compound is represented by the following formula (CI): 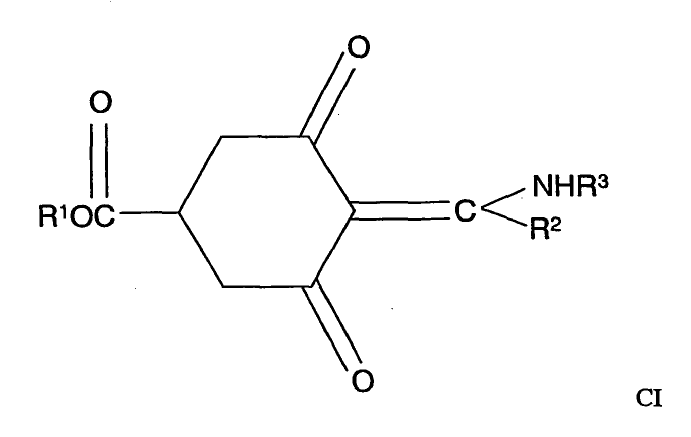 wherein R¹ represents a hydrogen atom or a lower alkyl group, R² represents a lower alkyl group, R³ represents a hydrogen atom, an alkyl group, an alkenyl group, a hydroxyalkyl group, a cycloalkyl group, morpholino group, an aminoalkyl group, an N-alkylaminoalkyl group, an N,N-dialkylaminoalkyl group, an alkoxycarbonylalkyl group,
a group of the formula:
- (CH₂)₁R⁴
(wherein R⁴ represents a lower alkyl group, a lower alkylthio group, a benzylthio group, an anilino group, a morpholino group, a piperazino group or a piperidino group, and 1 represents an integer of 2 or 3);
a group of the formula: 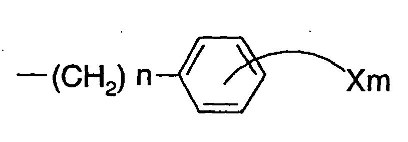 (wherein X represents a halogen atom, a lower alkyl group, a lower alkoxyl group, a phenoxy group or an alkoxycarbonylalkyloxy group, m represents an integer of 0 or 1, and n represents an integer of 0 to 2);
a group of the formula:
-CH₂R⁵
(wherein R⁵ represents a furyl group, a thenyl group or a pyridyl group),
or
a group of the formula: 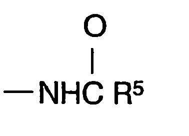 (wherein R⁵ is as defined above).

9. The method according to claim 1, wherein said prohexadione compound is represented by the following formula (DI): 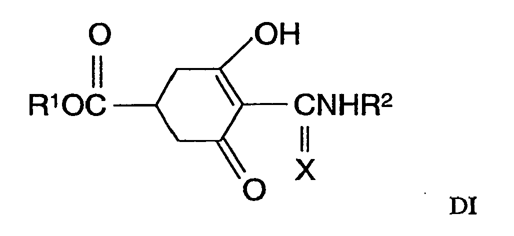 wherein R¹ represents a hydrogen atom, a lower alkyl group or a phenyl group, X represents an oxygen atom or a sulfur atom, R² represents a hydrogen atom, an alkyl group, an alkenyl group, an alkylthioalkyl group, an alkoxycarbonylmethyl group, a benzyl group substituted with a halogen atom, a group of the formula: 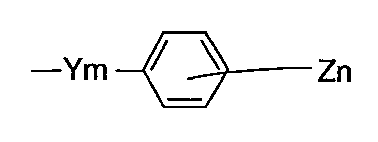 (wherein Y represents a carbonyl group, a sulfonyl group or a sulfonate group, Z represents a hydrogen atom, a halogen atom, a lower alkyl group, a lower alkoxyl group, a cyano group or a trifluoromethyl group, m represents 0 or 1, and n represents an integer of 1 or 2, with the proviso that when n represents 2, Z may be a combination of different groups or atoms), a furyl group or a thienyl group.

10. The method according to claim 1, wherein said Coniferophyta plant is Cryptomeria japonica.

## Patentansprüche

1. Verfahren zur Inhibierung der Bildung von Coniferophytapollen, umfassend das Aufbringen einer wirksamen Menge einer Zusammensetzung mit Pollinoseinhibierender Wirkung, die eine Prohexadionverbindung als Wirkstoff umfasst, auf die zu behandelnden Coniferophytapflanzen.

2. Verfahren gemäss Anspruch 1, worin die Prohexadionverbindung ein Cyclohexandioncarbonsäurederivat der folgenden Formel (AI) oder ein Salz davon ist: 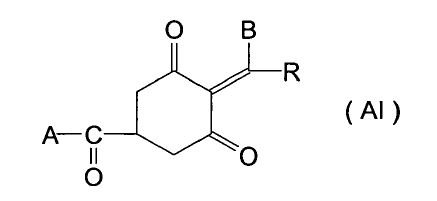 worin
A -OR₂ oder -NR₃R₄ darstellt,
B eine Hydroxylgruppe und eine -NHOR₁-Gruppe oder ein Metallsalz oder Ammoniumsalz davon darstellt,
R eine Alkylgruppe mit 1 bis 6 Kohlenstoffatomen oder eine Cycloalkylgruppe mit 3 bis 6 Kohlenstoffatomen darstellt,
R₁ eine Alkylgruppe mit 1 bis 6 Kohlenstoffatomen, eine Halogenalkylgruppe mit 1 bis 6 Kohlenstoffatomen, eine Alkenylgruppe mit 3 bis 6 Kohlenstoffatomen, eine Halogenalkylgruppe mit 3 bis 6 Kohlenstoffatomen oder eine Alkinylgruppe mit 3 bis 6 Kohlenstoffatomen darstellt; und
R₂, R₃ und R₄ unabhängig voneinander ein Wasserstoffatom, eine Alkylgruppe mit 1 bis 6 Kohlenstoffatomen, eine Halogenalkylgruppe mit 1 bis 6 Kohlenstoffatomen, eine Alkoxyalkylgruppe mit 2 bis 10 Kohlenstoffatomen, eine Alkylthioalkylgruppe mit 2 bis 10 Kohlenstoffatomen, eine Alkenylgruppe mit 3 bis 6 Kohlenstoffatomen, eine Alkinylgruppe mit 5 oder 6 Kohlenstoffatomen oder eine Phenylgruppe oder eine Aralkylgruppe mit 1 bis 6 Kohlenstoffatomen darstellt, und
R₃ und R₄ zusammen mit dem Stickstoffatom, an das sie gebunden sind, einen 5- oder 6-gliedrigen heterocyclischen Ring bilden können und der Ring ferner ein Kohlenstoffatom oder ein Schwefelatom enthalten kann.

3. Verfahren gemäss Anspruch 2, worin A in Formel (AI) eine -OR₂-Gruppe darstellt.

4. Verfahren gemäss Anspruch 2, worin A in Formel (AI) eine -NR₃R₄-Gruppe darstellt.

5. Verfahren gemäss Anspruch 2, worin R in Formel (AI) eine Cycloalkylgruppe mit 3 bis 6 Kohlenstoffatomen darstellt.

6. Verfahren gemäss Anspruch 2, worin die Prohexadionverbindung durch die folgende Formel (AIa) dargestellt wird:

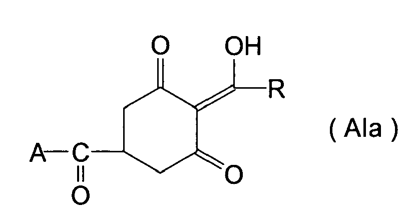

7. Verfahren gemäss Anspruch 1, worin die Prohexadionverbindung durch die folgende Formel (BI) dargestellt wird: 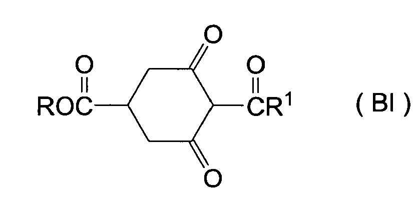 worin R ein Wasserstoffatom oder eine Alkylgruppe darstellt und R¹ eine Alkylgruppe darstellt.

8. Verfahren gemäss Anspruch 1, worin die Prohexadionverbindung durch die folgende Formel (CI) dargestellt wird: 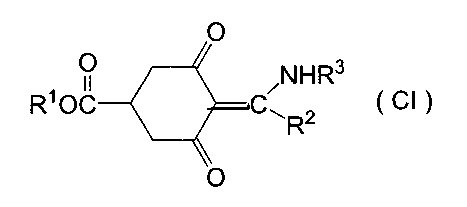 worin R¹ ein Wasserstoffatom oder eine Niederalkylgruppe darstellt, R² eine Niederalkylgruppe darstellt, R³ ein Wasserstoffatom, eine Alkylgruppe, eine Alkenylgruppe, eine Hydroxyalkylgruppe, eine Cycloalkylgruppe, eine Morpholinogruppe, eine Aminoalkylgruppe, eine N-Alkylaminoalkylgruppe, eine N,N-Dialkylaminoalkylgruppe, eine Alkoxycarbonylalkylgruppe,
eine Gruppe der Formel:
-(CH₂)₁R⁴
(worin R⁴ eine Niederalkylgruppe, eine Niederalkylthiogruppe, eine Benzylthiogruppe, eine Anilinogruppe, eine Morpholinogruppe, eine Piperazinogruppe oder eine Piperidinogruppe darstellt und 1 eine ganze Zahl von 2 oder 3 darstellt);
eine Gruppe der Formel: 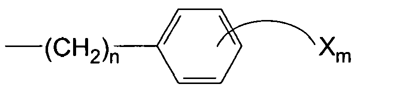 (worin X ein Halogenatom, eine Niederalkylgruppe, eine Niederalkoxylgruppe, eine Phenoxygruppe oder eine Alkoxycarbonylalkyloxygruppe darstellt, m eine ganze Zahl von 0 oder 1 darstellt und n eine ganze Zahl von 0 bis 2 darstellt);
eine Gruppe der Formel:
-CH₂R⁵
(worin R⁵ eine Furylgruppe, eine Thienylgruppe oder eine Pyridylgruppe darstellt), oder
eine Gruppe der Formel: 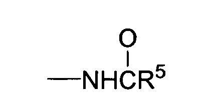 (worin R⁵ wie oben definiert ist)
darstellt.

9. Verfahren gemäss Anspruch 1, worin die Prohexadionverbindung durch die folgende Formel (DI) dargestellt wird: 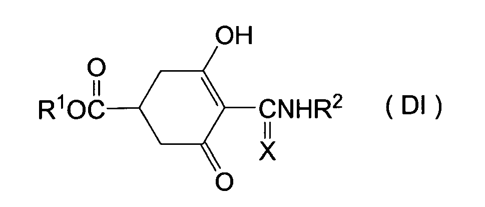 worin R¹ ein Wasserstoffatom, eine Niederalkylgruppe oder eine Phenylgruppe darstellt, X ein Sauerstoffatom oder ein Schwefelatom darstellt, R² ein Wasserstoffatom, eine Alkylgruppe, eine Alkenylgruppe, eine Alkylthioalkylgruppe, eine Alkoxycarbonylmethylgruppe, eine Benzylgruppe, substituiert mit einem Halogenatom, eine Gruppe der Formel: 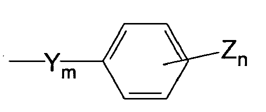 (worin Y eine Carbonylgruppe, eine Sulfonylgruppe oder eine Sulfonatgruppe darstellt, Z ein Wasserstoffatom, ein Halogenatom, eine Niederalkylgruppe, eine Niederalkoxygruppe, eine Cyanogruppe oder eine Trifluormethylgruppe darstellt, m 0 oder 1 darstellt und n eine ganze Zahl von 1 oder 2 darstellt, unter der Voraussetzung, dass, wenn n 2 darstellt, Z eine Kombination unterschiedlicher Gruppen oder Atome sein kann), eine Furylgruppe oder eine Thienylgruppe darstellt.

10. Verfahren gemäss Anspruch 1, worin die Coniferophytapflanze Cryptomeria japonica ist.

## Revendications

1. Méthode d'inhibition de la formation de pollen de coniférophytes, qui comprend l'application d'une quantité efficace inhibant une pollinose d'une composition comprenant un composé de prohexadione en tant que principe actif à la plante coniférophyte à traiter.

2. Méthode selon la revendication 1, dans laquelle ledit composé de prohexadione est un dérivé de l'acide cyclohexanedionecarboxylique de la formule (AI) suivante ou un sel de celui-ci : 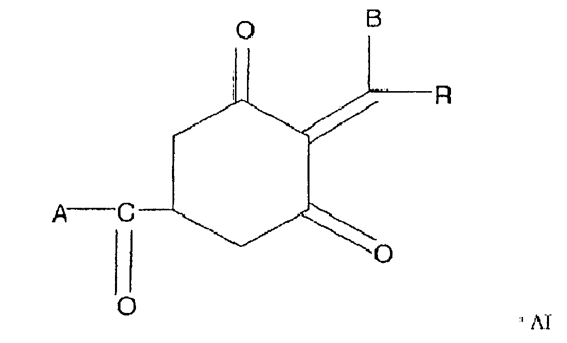 dans laquelle A représente -OR₂ ou -NR₃R₄,
B représente un groupe hydroxyle et un groupe - NHOR₁ ou un sel métallique ou un sel d'ammonium de celui-ci,
R représente un groupe alkyle ayant 1 à 6 atomes de carbone ou un groupe cycloalkyle ayant 3 à 6 atomes de carbone,
R₁ représente un groupe alkyle ayant 1 à 6 atomes de carbone, un groupe halogénoalkyle ayant 1 à 6 atomes de carbone, un groupe alcényle ayant 3 à 6 atomes de carbone, un groupe halogénoalcényle ayant 3 à 6 atomes de carbone ou un groupe alcynyle ayant 3 à 6 atomes de carbone, et
R₂, R₃ et R₄ représentent indépendamment un atome d'hydrogène, un groupe alkyle ayant 1 à 6 atomes de carbone, un groupe halogénoalkyle ayant 1 à 6 atomes de carbone, un groupe alcoxyalkyle ayant 2 à 10 atomes de carbone, un groupe alkylthioalkyle ayant 2 à 10 atomes de carbone, un groupe alcényle ayant 3 à 6 atomes de carbone, un groupe alcynyle ayant 5 ou 6 atomes de carbone, ou un groupe phényle ou un groupe aralkyle ayant 1 à 6 atomes de carbone, et
R₃ et R₄ peuvent former un cycle hétérocyclique de 5 ou 6 chaînons conjointement avec l'atome d'azote auquel ils sont liés et le cycle peut contenir en outre un atome de carbone ou un atome de soufre.

3. Méthode selon la revendication 2, dans laquelle A dans la formule (AI) représente un groupe -OR₂.

4. Méthode selon la revendication 2, dans laquelle A dans la formule (AI) représente un groupe -NR₃R₄.

5. Méthode selon la revendication 2, dans laquelle R dans la formule (AI) représente un groupe cycloalkyle ayant 3 à 6 atomes de carbone.

6. Méthode selon la revendication 2, dans laquelle ledit composé de prohexadione est représenté par la formule AIa suivante :

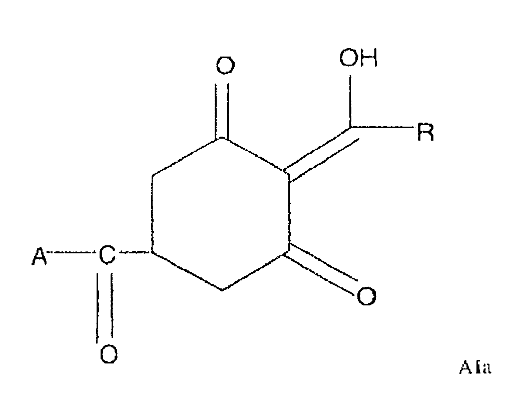

7. Méthode selon la revendication 1, dans laquelle ledit composé de prohexadione est représenté par la formule BI suivante : 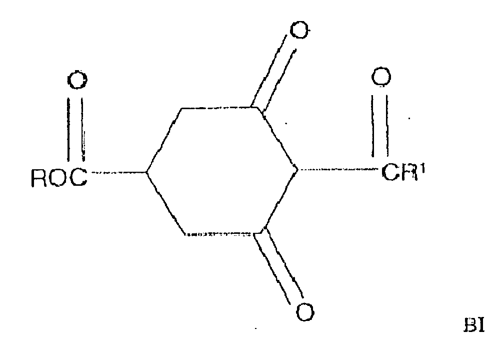 dans laquelle R représente un atome d'hydrogène ou un groupe alkyle, et R¹ représente un groupe alkyle.

8. Méthode selon la revendication 1, dans laquelle ledit composé de prohexadione est représenté par la formule (CI) suivante : 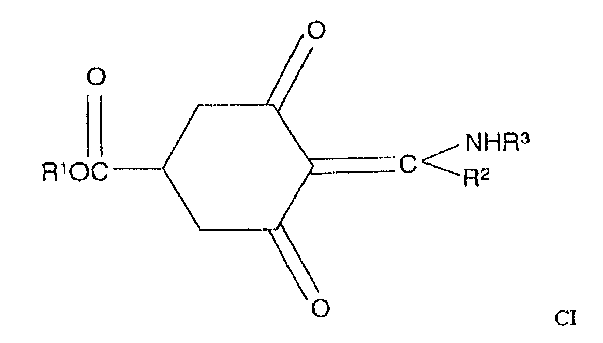 dans laquelle R¹ représente un atome d'hydrogène ou un groupe alkyle inférieur, R² représente un groupe alkyle inférieur, R³ représente un atome d'hydrogène, un groupe alkyle, un groupe alcényle, un groupe hydroxyalkyle, un groupe cycloalkyle, un groupe morpholino, un groupe aminoalkyle, un groupe N-alkylaminoalkyle, un groupe N,N-dialkylaminoalkyle, un groupe alcoxycarbonylalkyle,
un groupe de formule :
- (CH₂)₁R⁴
(dans laquelle R⁴ représente un groupe alkyle inférieur, un groupe alkyl inférieur-thio, un groupe benzylthio, un groupe anilino, un groupe morpholino, un groupe pipérazino ou un groupe pipéridino et 1 représente un nombre entier de 2 ou 3) ;
un groupe de formule : 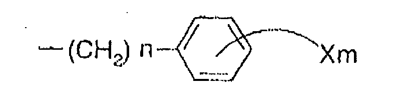 (dans laquelle X représente un atome d'halogène, un groupe alkyle inférieur, un groupe alcoxyle inférieur, un groupe phénoxy ou un groupe alcoxycarbonylalkyloxy, m représente un nombre entier de 0 ou 1, et n représente un nombre entier de 0 à 2) ;
un groupe de formule :
-CH₂R⁵
(dans laquelle R⁵ représente un groupe furyle, un groupe thiényle ou un groupe pyridyle),
ou
un groupe de formule : 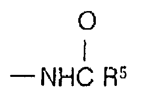 (dans laquelle R⁵ est tel que défini ci-dessus).

9. Méthode selon la revendication 1, dans laquelle ledit composé de prohexadione est représenté par la formule (DI) suivante : 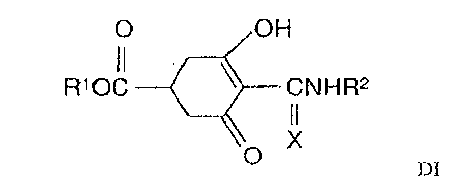 dans laquelle R¹ représente un atome d'hydrogène, un groupe alkyle inférieur ou un groupe phényle, X représente un atome d'oxygène ou un atome de soufre, R² représente un atome d'hydrogène, un groupe alkyle, un groupe alcényle, un groupe alkylthioalkyle, un groupe alcoxycarbonylméthyle, un groupe benzyle substitué par un atome d'halogène, un groupe de formule : 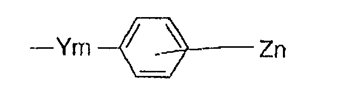 (dans laquelle Y représente un groupe carbonyle, un groupe sulfonyle ou un groupe sulfonate, Z représente un atome d'hydrogène, un atome d'halogène, un groupe alkyle inférieur, un groupe alcoxyle inférieur, un groupe cyano ou un groupe trifluorométhyle, m représente 0 ou 1, et n représente un nombre entier de 1 ou 2, à condition que lorsque n représente 2, Z puisse être une combinaison de différents groupes ou atomes), un groupe furyle ou un groupe thiényle.

10. Méthode selon la revendication 1, dans laquelle ladite plante coniférophyte est *Cryptomeria japonica.*
